# EUROPEAN PATENT SPECIFICATION

(11) **EP 1 119 717 B1**
(45) Date of publication and mention of the grant of the patent: **10.09.2003**
(21) Application number: 99952171.9
(22) Date of filing: 15.10.1999
(51) Int. Cl.: F16H 35/00

(54) **ALL GEAR INFINITELY VARIABLE TRANSMISSION**
STUFENLOSES GETRIEBE MIT ZAHNRÄDER
TRANSMISSION A RAPPORT VARIABLE A L'INFINI

(30) Priority: 16.10.1998 US 104477 P
(43) Date of publication of application: 01.08.2001
(73) Proprietor: KER-TRAIN HOLDINGS LTD., Kingston Ontario K7L 4V1 (CA)
(72) Inventor: KERR, John, Hugh, Kingston, Ontario K7L 4V1 (CA)
(74) Representative: Bertram, Rainer
(86) International application number: CA9900951
(87) International publication number: WO00023729

(56) References cited:
- WO-A-88/02081
- WO-A-99/28645
- FR-A- 2 546 598
- GB-A- 374 547
- GB-A- 732 319
- US-A- 2 239 313
- US-A- 3 721 131
- US-A- 3 919 895
- HINDERSMANN M ET AL: "UNRUNDE ZAHNRAEDER - EIN WIEDERENTDECKTES MASCHINENELEMENT" KONSTRUKTION,DE,SPRINGER-VERLAG. BERLIN, vol. 48, no. 9, 1 January 1996 (1996-01-01), pages 256-262, XP000195424

## Description

### FIELD OF THE INVENTION

The present invention relates to gear systems having variable velocity ratios. In particular, the present invention relates to all-gear transmissions whose velocity ratios may be vaned continuously over the velocity ratio continuum.

### BACKGROUND OF THE INVENTION

The conventional transmission incorporates a number of planetary gears which are selectively coupled between the input and output shafts for changing the velocity ratio of the transmission. However, the conventional transmission results in an inefficient transfer of torque between the input and output shafts since the prime mover must be uncoupled from the transmission output shaft while the planetary gears are switched. Further, since engine speed must vary in each gear ratio to affect speed change of the output shaft, the efficiency of the engine cannot be maximized for any particular operating condition. Therefore, many attempts have been made to provide a transmission whose velocity ratios are infinitely variable over the velocity ratio continuum.

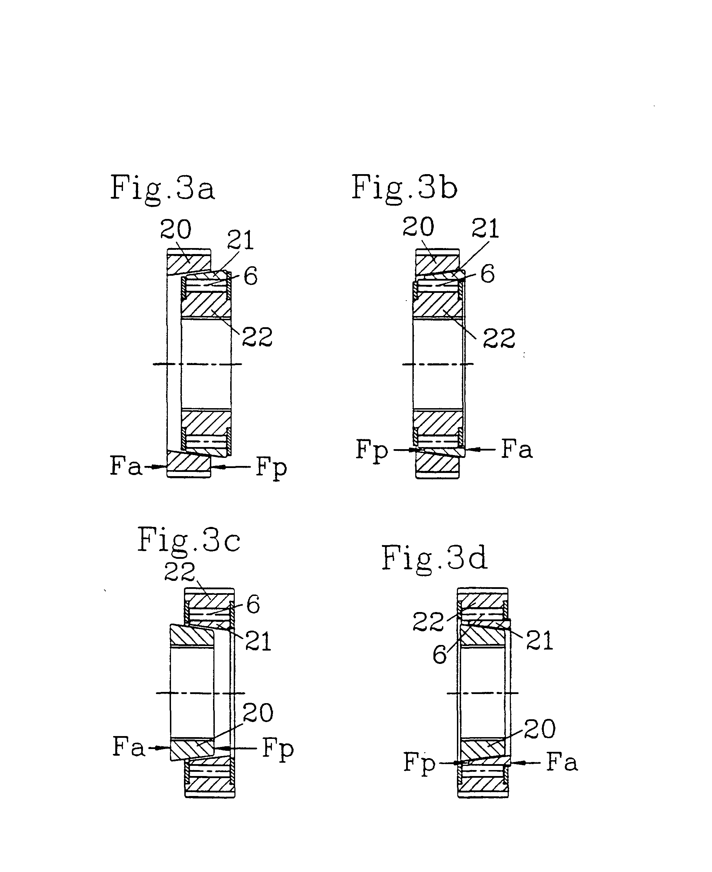

For instance, Beschkine (US Patent 2,239,313, which shows the features of the preamble of the indenpendent claims 1 and 25) teaches a gear system incorporating continuously-meshing non-circular gears. As shown in Fig. 3 of the patent, the gear system comprises a driving shaft P including a plurality of non-circular gears 1, 2, 3, 4, and a driven shaft R parallel to the driven shaft P including a plurality of non-circular gears 1', 2', 3', 4' meshing with the gears 1, 2, 3, 4. The driven gears 1', 2', 3', 4' are coupled successively to the driven shaft R by electromagnetic clutches for a respective portion of the interval of revolution of the driven shaft R so that the velocity ratio of the gear system is dependent upon the gear ratios of the gears 1-1', 2-2', 3-3', 4-4' over their respective coupling intervals. Consequently, the velocity ratio of the gear system is varied by simply changing the angular position of the gears 1', 2', 3', 4' during their coupling intervals. However, as the clutches must be activated each revolution of the driven shaft R, the clutches must be relatively small to be used for high speed applications, thereby limiting the torque which can be carried by the gear system.

Kerr (Canadian Patents 990,103; 1,000,526; 1,031,190; US Patents 3,919,895; 4,055,091) teaches variable output transmission incorporating square-wave generators for facilitating changes to the velocity ratio. Each transmission comprises a pair of non-circular driving gears coupled to an input shaft, and a pair of non-circular driven gears which continuously mesh with the driven gears. The velocity ratio profile of each non-circular gear pair resembles a triangular or saw-tooth wave. The rotational outputs of the two non-circular gear pairs are combined through a differential to provide a differential output having a square-wave velocity ratio profile. The differential outputs of a number of such differentials are combined together through one-way overrunning clutches to a provide a velocity ratio which is infinitely variable in accordance with the relative angular displacement of the driving gears. The variable output transmissions taught by Kerr represented a significant advance over the prior art. However, overrunning clutches can only transfer energy in a single direction, thereby precluding engine drag. Further, as the variable output transmissions only amplified the positive or negative periods of the square-wave velocity ratio profile, the efficiency and maximum kinematic range of the transmissions was limited.

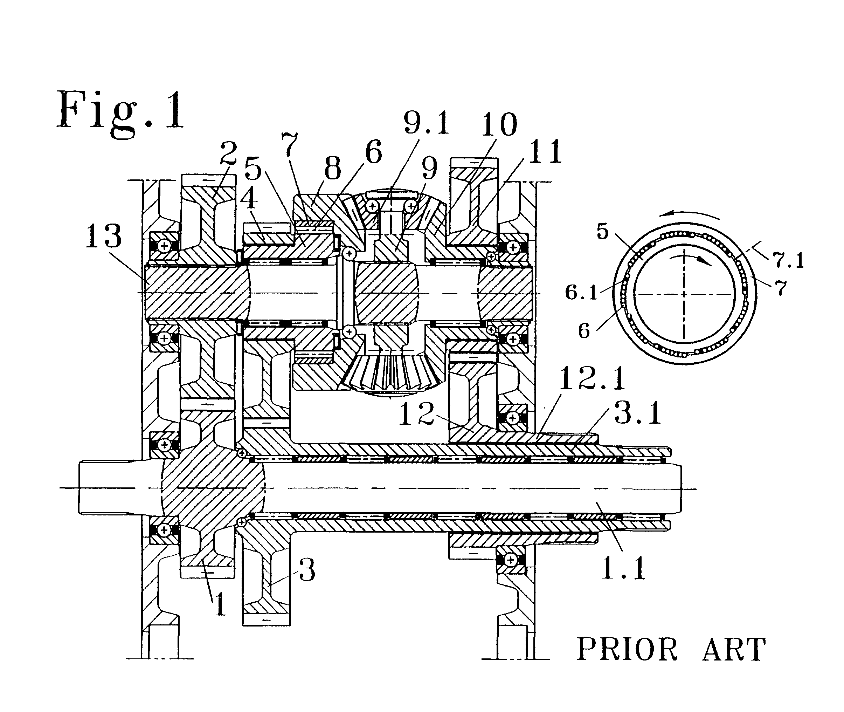

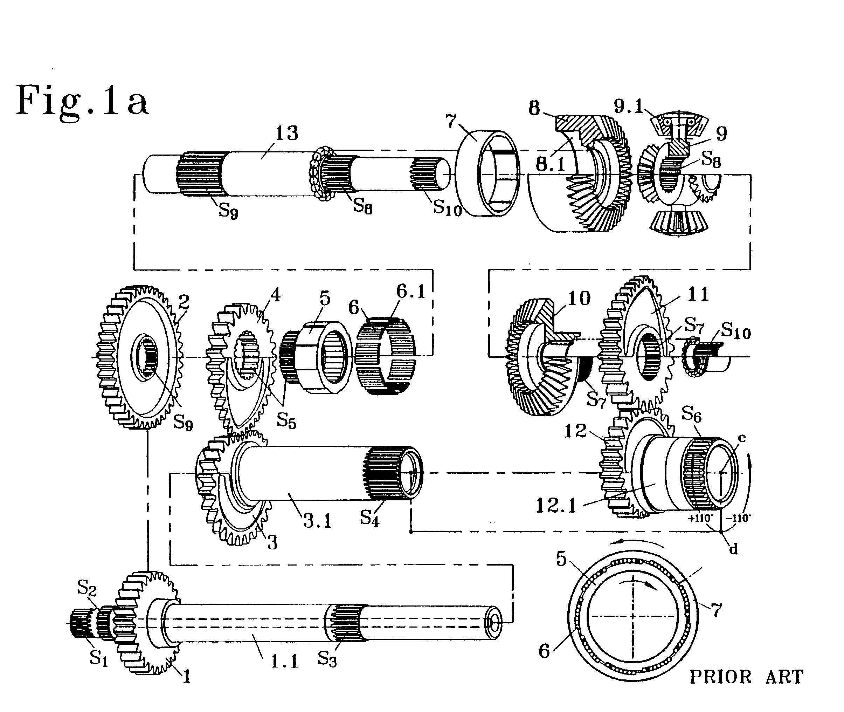

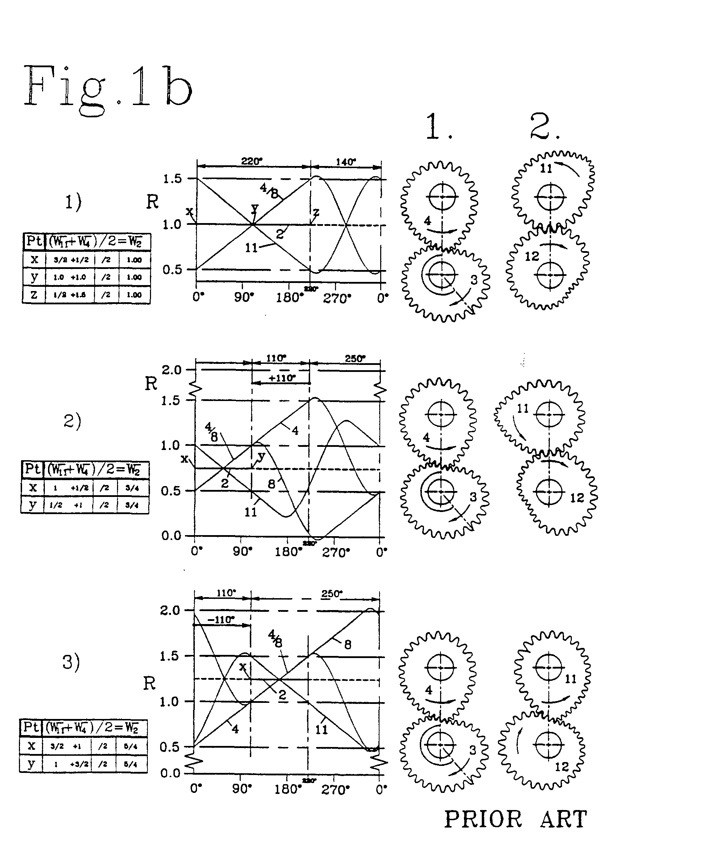

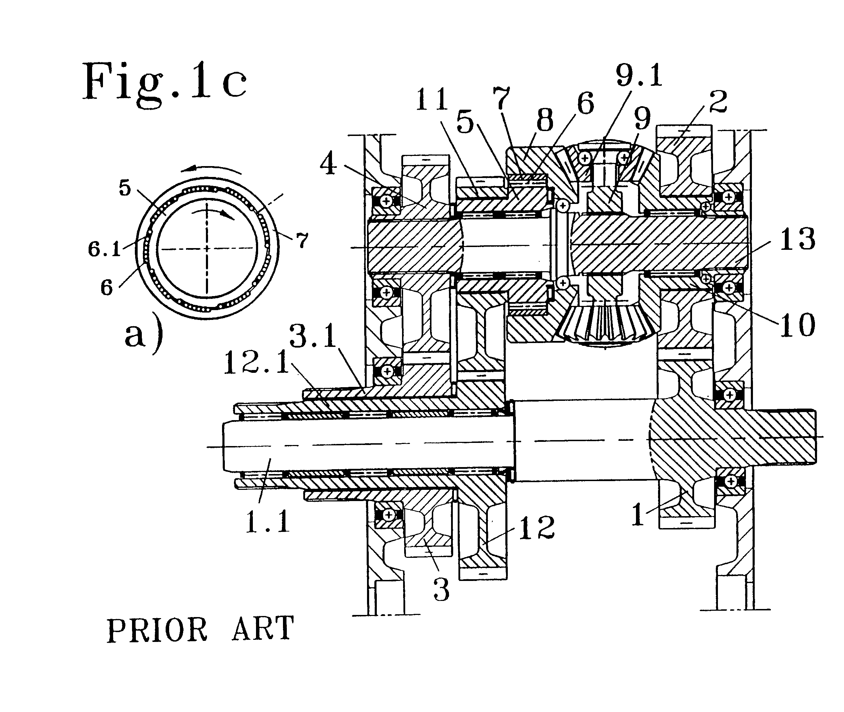

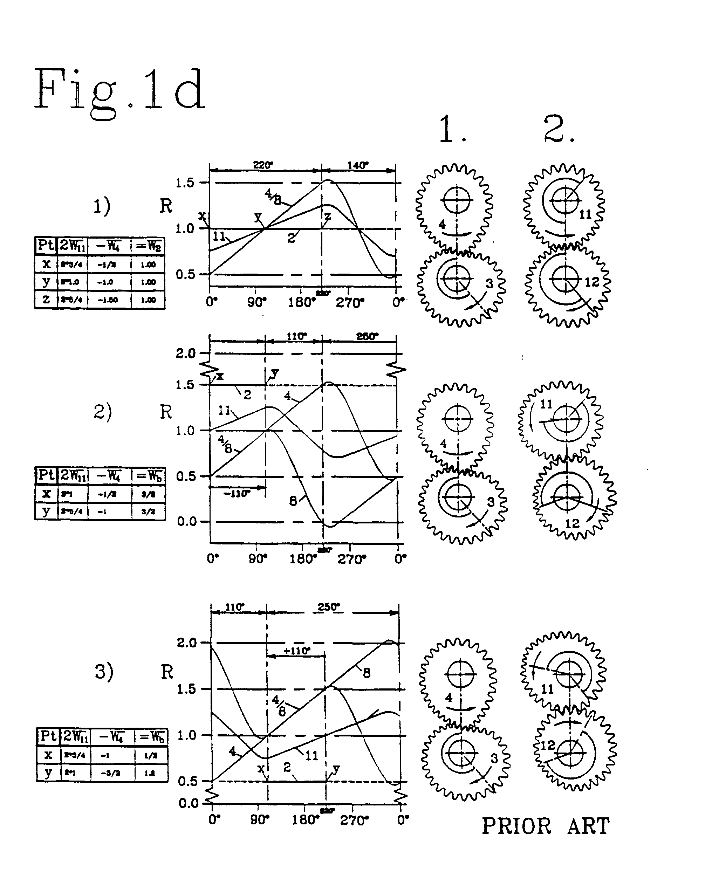

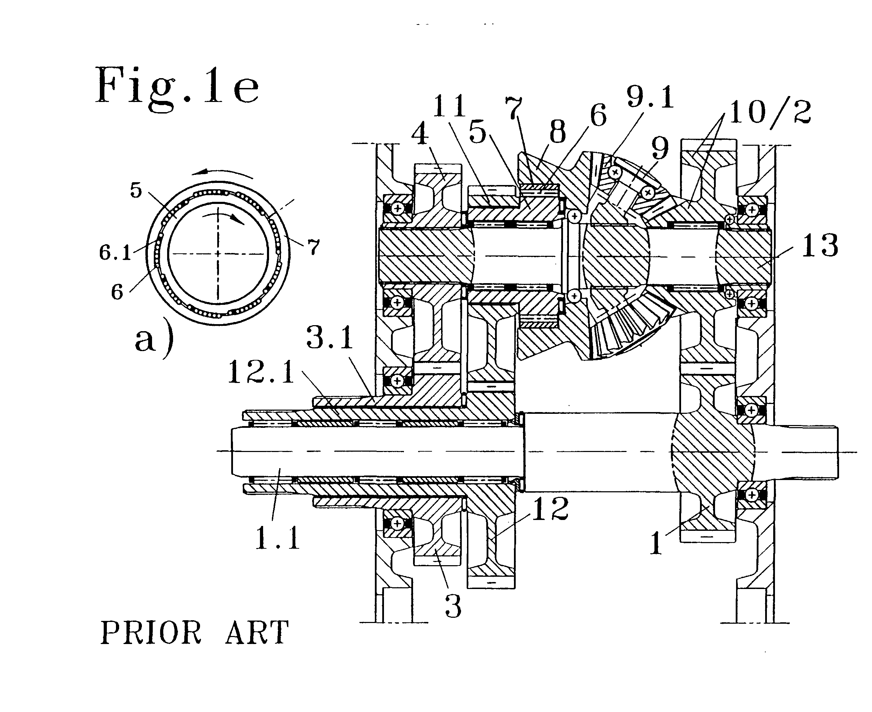

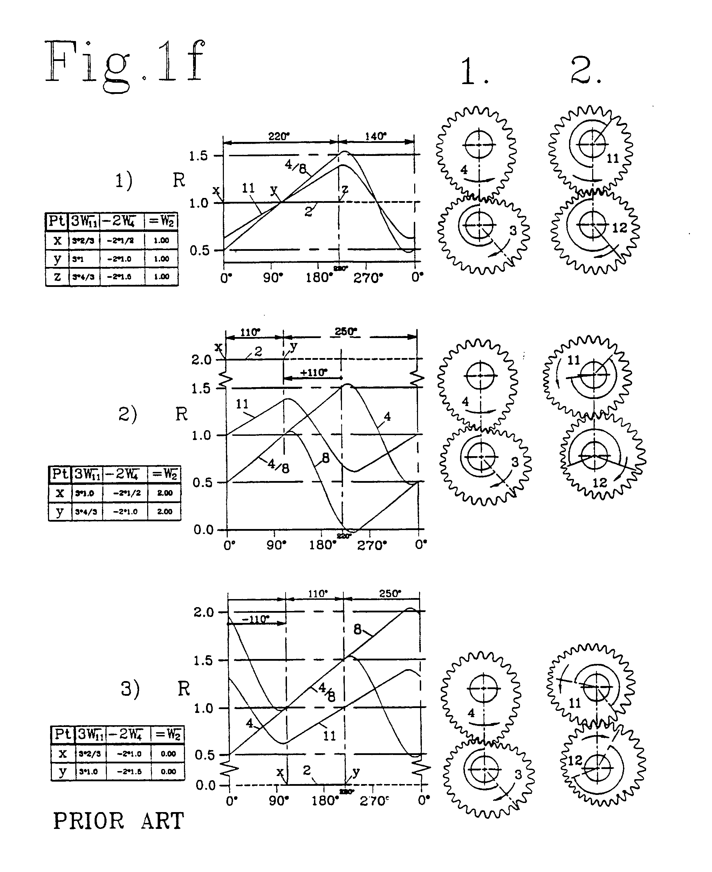

Takahara (US Patent 4,944,718) teaches an angular velocity modulating device which, as shown in Figs. 1 to 3 of the patent, comprises a first rotatable shaft 24 rotatably coupled to a stationary first frame 61; non-circular internal gears 11 mounted on the first shaft 24: a second parallel shaft 34 rotatably mounted on a rotatable second frame 62; second non-circular gears 21 meshing with the first non-circular gears 11 and fixed on the parallel second shaft 24; third non-circular gears 31 meshing with the first non-circular gears 11 and mounted on the parallel third shaft 34 through an overrunning clutch 37; an input shaft 44 including a circular gear 27 for rotating the second shaft 24: and an output shaft 54 including a circular gear 54 driven by the third shaft 34. Since the velocity ratio of the device is vaned by changing the angular displacement of the second frame 62 relative to the first frame 61, rapid changes in velocity ratio would be difficult to attain since the angular displacement of the second frame 62 could only be changed by also moving the second shaft 34 and the mass of the accompanying non-circular gears 34. Further, as discussed above, the overrunning clutches preclude engine drag and reduce the efficiency and maximum kinematic range of the device.

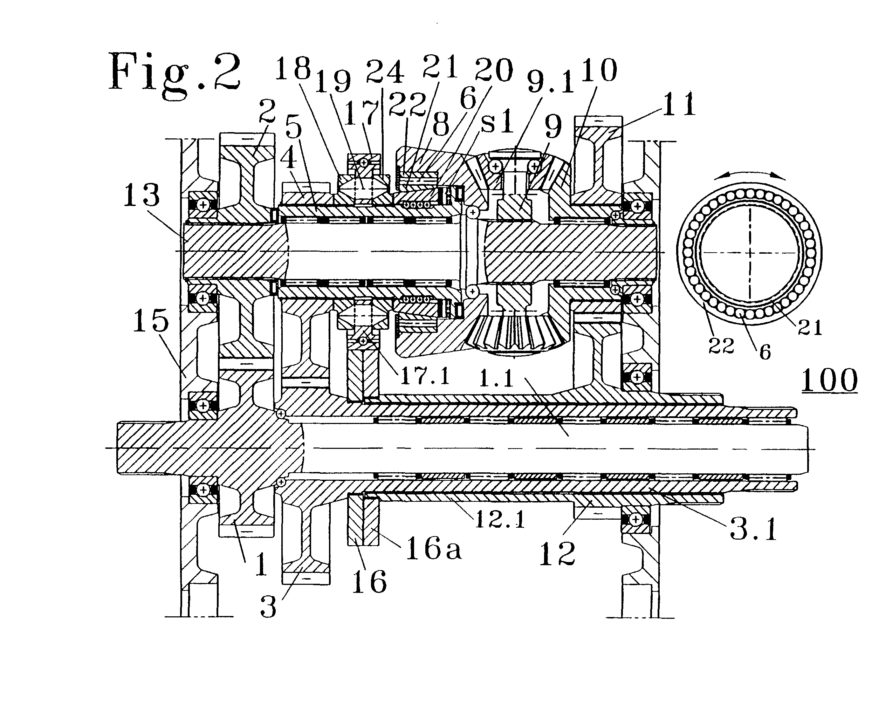

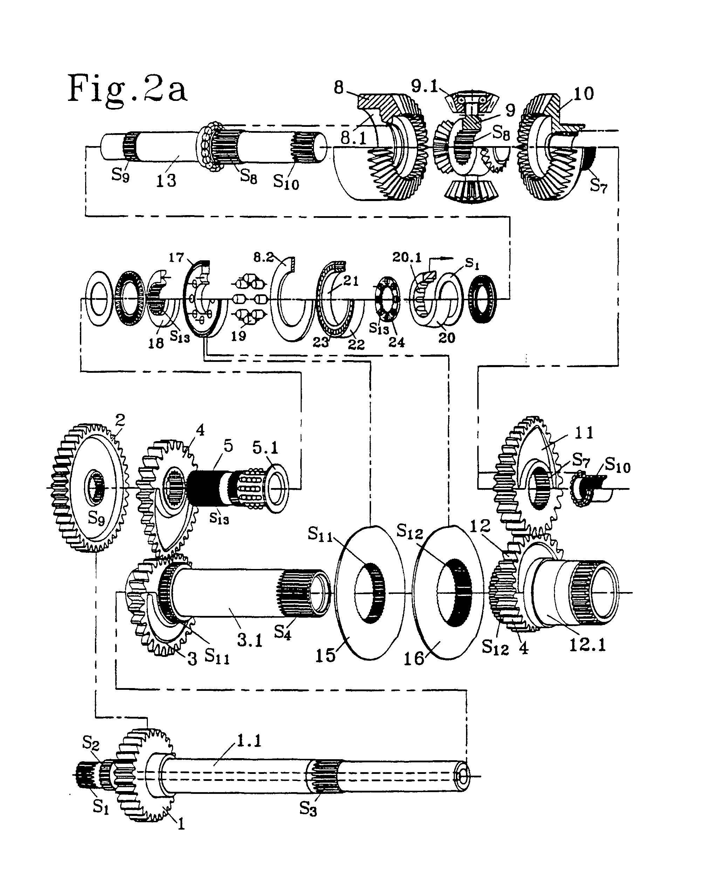

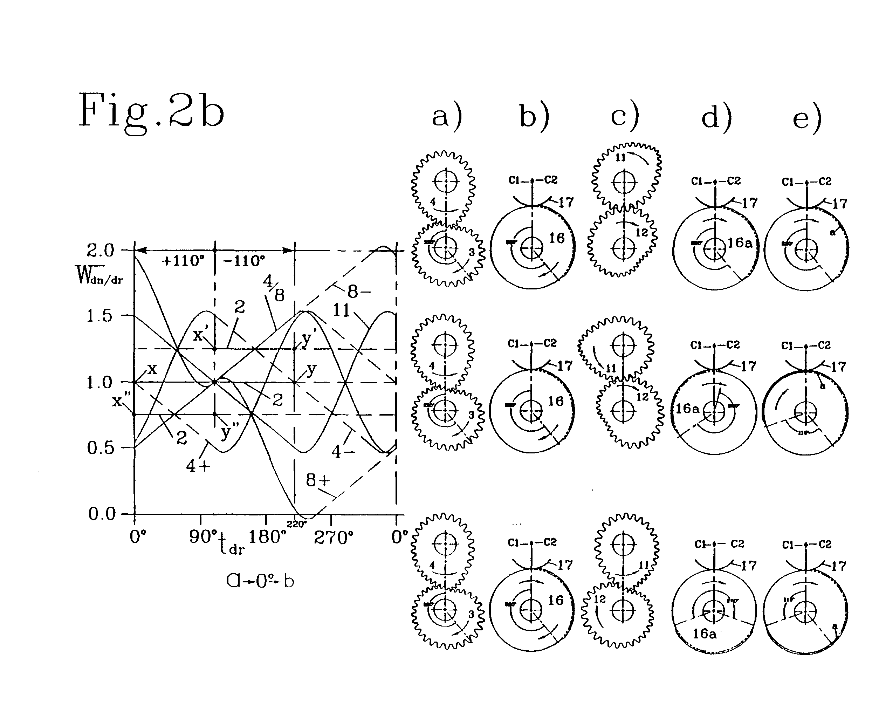

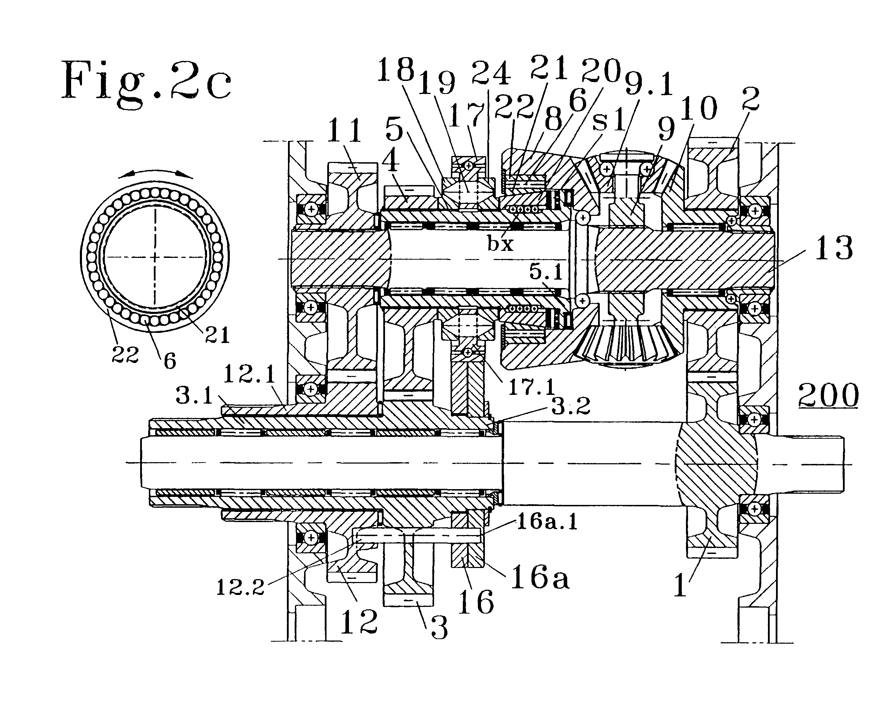

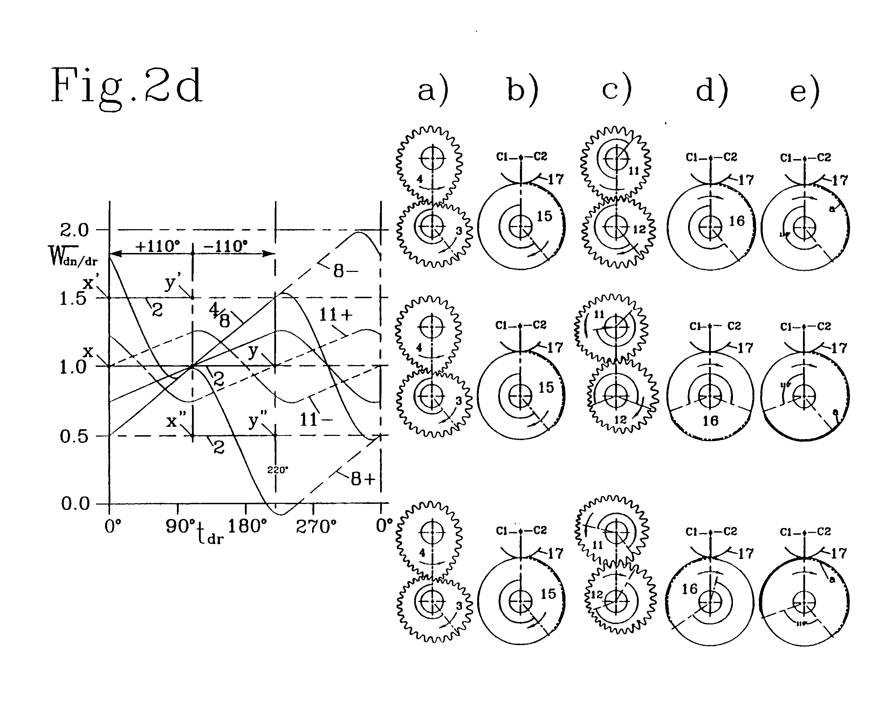

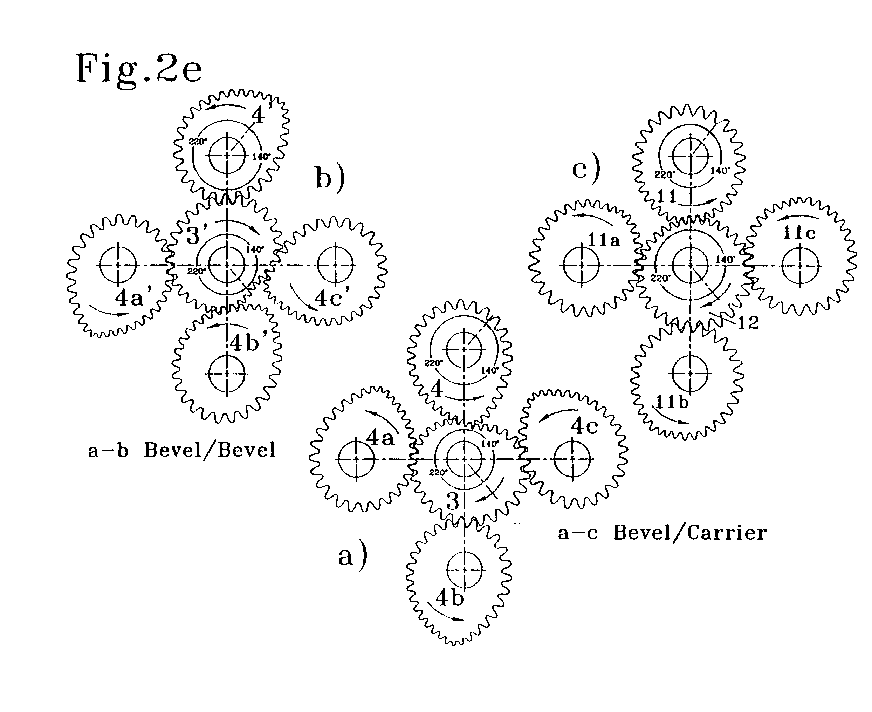

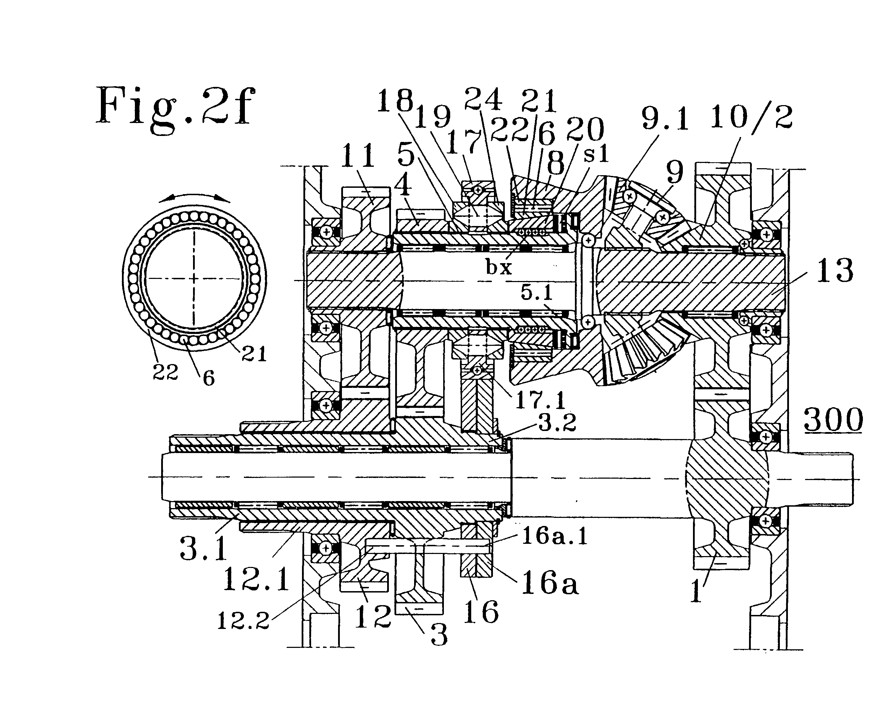

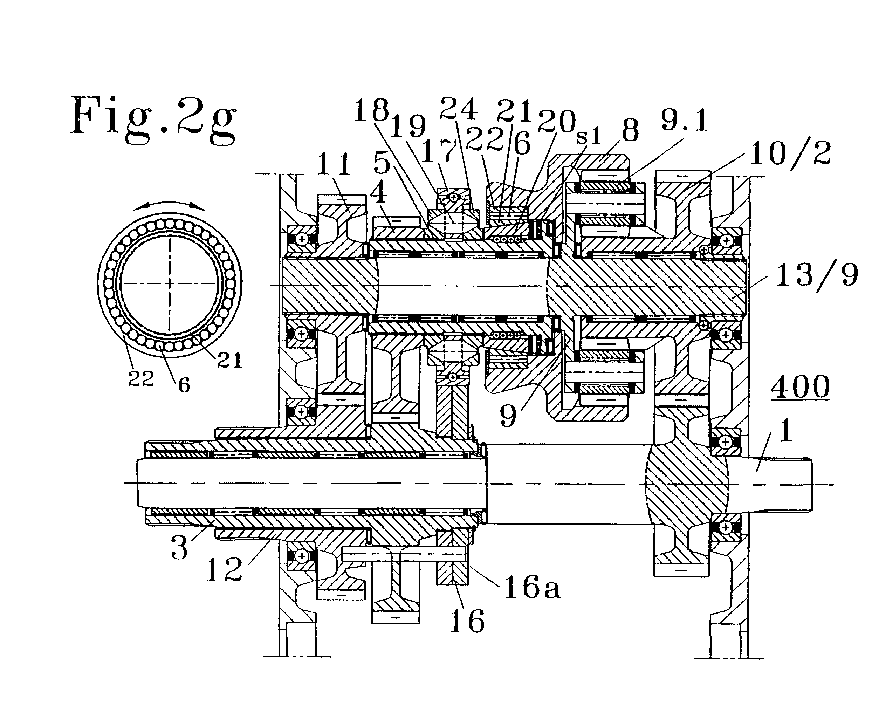

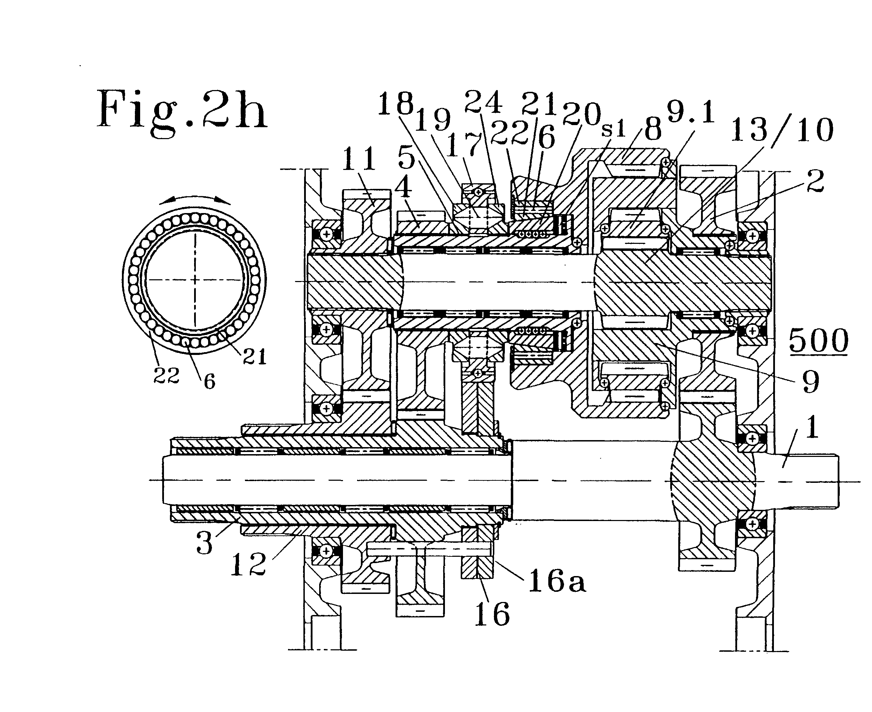

Recently, Pires (US Patents 5,226,859; 5,334,115) disclosed an infinitely variable transmission which eliminates the need for overrunning clutches. As shown in Figs. 2, 3 and 4 of the '859 patent, the transmission comprises an input shaft 5, a planetary rotor 29 connected to the input shaft 5 through a front plate 5'. a first pair of crank arms 8a, 8c rotatably coupled to the planetary rotor 29. a second pair of crank arms 9b. 9d rotatably coupled to the planetary rotor 29, and an index plate 7 which incorporates slots for receiving an end of the crank arms. The index plate 7 is supported on an index slide 6 which allows the index plate to move laterally of the shaft 5. The transmission also includes four planar differential gear sets, each set comprising an internally-toothed ring gear 12 coupled to one of the crank arms, a pair of pinions 14 meshing with the ring gear 12, and a sun gear 15 meshing with the pinions 14. The sun gear 15 of each differential gear set is connected to a reaction gear 16 which meshes with an internally-toothed stationary commutator gear 28.

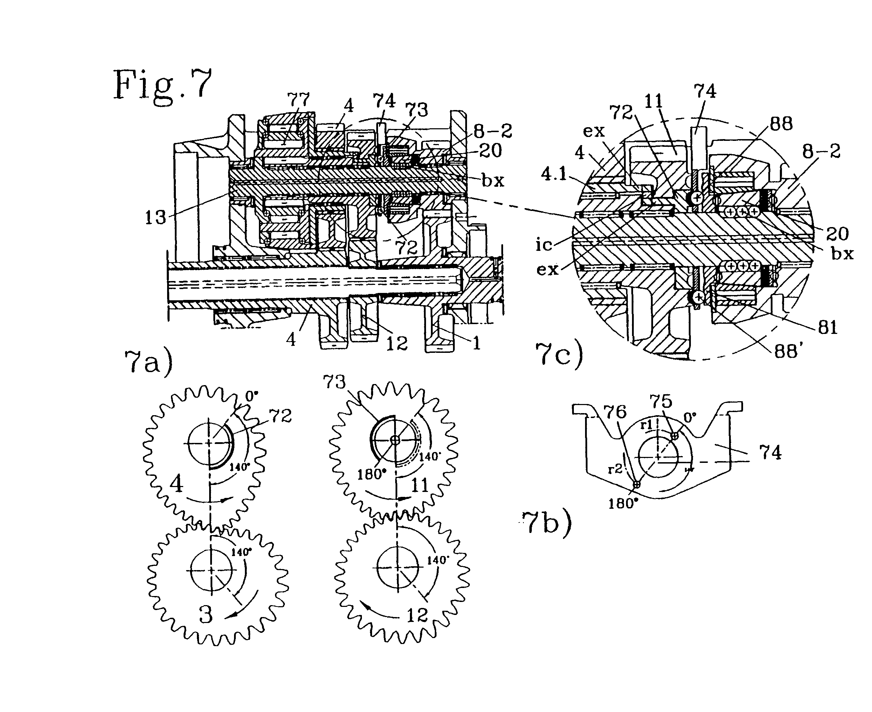

In operation, when the input shaft 5 rotates, the planetary rotor 29 is forced to rotate, causing the crank arms to drive the index plate 7 about its own axis of rotation, as defined by the index slide 6. If the index plate 7 is eccentric to the axis of the planetary rotor 29, the crank arms oscillate about their own axes while orbiting the planetary rotor 29. The amplitude of oscillations is a function of the eccentricity of the index plate 7. The rotational oscillations are delivered to the differential gear sets by the ring gears 12. As shown in Fig. 7 of the patent, the commutator gear 28 includes teeth only around half of the inner circumference of the gear, so that the reaction gears 16 rotate freely one half of a rotational cycle of the input shaft 5. Consequently, when the "desired" polarity of oscillation is present at the crank arm, the commutator gear 28 provides a supplemental rotational input to the differential, whereas when the "undesired" polarity of oscillation is present, the commutator gear 28 prevents the oscillation from reducing the output of the transmission.

Although the transmission taught by Pires addresses the problems imposed by overrunning clutches on efficiency and kinematic range, the transmission is quite complex. Further, it is believed that the oscillating crank arms will produce undesirable fluctuations in the velocity ratio of the transmission. Accordingly, there remains a need for an infinitely-variable all gear transmission which has an enhanced kinematic range, is capable of making rapid changes in velocity ratios, and can take advantage of engine drag.

Further, conventional non-circular gears employ standard involute-shaped gear teeth. Although the involute-shaped gear teeth are acceptable for use with circular gears, involute-shaped gear teeth when used on non-circular gears cause the contact ratio between the gears to continuously vary. These variations in contact ratio cause excessive gear noise. Also, the contact ratio of involute-shaped teetheven on circular gears rarely reaches 2.0. Consequently, the load which can be carried by the gears is limited. Although the contact ratio may be increased by twisting the gear teeth, twisted gear teeth produce point contact which creates Hertzian stress. Accordingly, there also remains a need for non-circular gears having a constant contact ratio which is preferably at least 2.0.

### SUMMARY OF THE INVENTION

According to the invention, there is provided an infinitely-variable transmission which addresses the deficiencies of the prior art.

The infinitely-variable transmission, according to the present invention, comprises in one embodiment, which is claimed in independent claim 1, a rotational input member, a rotational output member, a pair of variable velocity-ratio gear sets, a multi-directional coupling associated with the gear sets, and an actuator associates with the coupling. The coupling couples the gear sets to the rotational members over a common angular period so as to provide a uniform velocity ratio between the rotational members over the angular period. The transmission also includes a phase angle variator associated with at least one of the gear sets for varying a rotational angular displacement between the gear sets. Consequently, the velocity ratio of the transmission can be varied while maintaining the velocity ratio uniform over the angular period.

In an other embodiment of the invention, which is claimed in independent claim 25, the transmission comprises a first and second noncircular driving gears coupled to one of the rotational members, and a plurality of variable velocity-ratio gear assemblies disposed about the one rotational members. The gear assemblies are coupled to the noncircular gears and the other of the rotational members for providing a uniform velocity ratio between the rotational members. Each gear assembly comprises an intermediate shaft including first and second noncircular driven gears meshing respectively with the first and second non-circular driving gears. Preferably, the velocity ratio of each variable-ratio pair of first driven/driving gears and the velocity ratio of each variable-ratio pair of second driven/driving gears includes a constant acceleration portion.

Each gear assembly also comprises a multi-directional coupling associated with the respective first and second variable-ratio gear pairs, and an actuator associated with the coupling for coupling the respective variable-ratio gear pairs to the rotational members. Preferably, the variable-ratio gears of each gear assembly are coupled to the rotational members over an angular period when the velocity ratios of both the first and second variable-ratio gear pairs of the respective gear assembly are changing linearly so as to provide a uniform velocity ratio over that angular period. Outside this period, at least one of the respective variable-ratio gear pairs is uncoupled from the rotational members. Further, preferably the occurrences of these angular durations for each of the gear assemblies overlap or are at least coterminous so as to provide a continuously uniform velocity ratio between the rotational members.

The transmission also includes a phase angle variator associated with the variable-ratio gear pairs for varying the rotational angular displacement between the first gear pairs and the second gear pairs of each gear assembly so as to vary the velocity ratio of the transmission as needed.

Variable-ratio gear pairs having a constant contact ratio, and a method for defining teeth flanks for such gears for providing a constant contact ratio are also disclosed. In accordance with the method, tooth flanks for the constant contact ratio variable-ratio gears are defined by first determining a pitch locus for one of the non-circular gears. Then the pitch locus is segmented into pitch locus portions. An effective pitch circle locus for the pitch locus portions is then determined by projecting the pitch locus portions onto a centre line joining centres of the non-circular gears. An effective generating circle locus for the effective pitch circle locus is then determined, in accordance with a desired pressure angle between the non-circular gears. Finally, a locus of congruency for the gears is determined from the effective generating circle locus.

### BRIEF DESCRIPTION OF THE DRAWINGS

The preferred embodiments of the invention will now be described, by way of example only, with reference to the drawings, in which:
Figs. 1, and 1a to 1f depict certain prior art infinitely-variable transmissions;
Figs. 2, and 2a to 2h depict certain infinitely-variable transmissions according to the present invention, showing the variable velocity-ratio gear set, the multi-directional coupling, and the shadow cam disc actuator;
Figs. 3a to 3d depict certain variations of the multi-directional coupling;
Figs. 4a to 4c depict a variation of the shadow cam disc actuator;
Figs. 5a, 5b depict a variation of the shadow cam disc actuator, incorporating a rocker arm;
Figs. 6, 6a, 6b depict further variations of the shadow cam disc actuator;
Figs. 7, and 7a to 7c depict further variations of the shadow cam disc actuator, incorporating roller ball followers;
Figs. 8, 8a, 9, 9a, 10 and 10a depict further variations of the shadow cam disc actuator shown in Figs. 7, and 7a to 7c;
Figs. 11, 11a to 11b depict the phase angle variator for use with the infinitely-variable transmissions of the present invention;
Figs. 12, 13, 13a, 13b, 14, 14a, 14b depict certain variations of the phase angle variator;
Figs. 15, and 15a to 15i depict a preferred tooth flank shape for use as a part of the variable velocity-ratio gear set; and
Figs 16, 16a, 16b, 17 depict certain preferred implementations of the infinitely-variable transmissions according to the present invention.

### DETAILED DESCRIPTION OF THE PREFERRED EMBODIMENTS

To assist in understanding the invention, certain prior art infinitely-variable transmissions will be described first, with reference to figs. 1a to If, followed by a discussion of one embodiment of the invention beginning with Fig. 2. Figs. 1, 1a shows a partial layout of the components of a prior art infinitely-variable transmission. The transmission comprises an output gear 1 coupled to an output shaft 1.1, a first input shaft 3.1 including a first non-circular driver gear 3, and a second input shaft 12.1 rotatably coupled to the first input shaft 3.1 and including a second non-circular driver gear 12. The second non-circular gear 12 may be rotated angularly with respect to the first non-circular gear 1 by rotating the second input shaft 12.1 relative to the first input shaft 3.1 through a phase angle variator (not shown).

The prior art infinitely-variable transmission also includes four identical variable-ratio gear assemblies disposed at equal angular intervals around the input shaft 3.1 and the output shaft 1.1. For convenience, only one variable-ratio gear assembly is shown. Each variable-ratio gear assembly comprises an intermediate shaft 13. a first non-circular driven gear 4 rotatably disposed around the intermediate shaft 13 and meshing with the first non-circular driver gear 3, a second non-circular driven gear 11 rotatably disposed around the intermediate shaft 13 and meshing with the second non-circular driver gear 12, and a differential coupled to the first and second driven gears 4, 11 for combining the torque delivered to the output shaft 1.1 from the first and second gear sets. The differential includes a first bevel gear 8, a second bevel gear 10, and a cage 9 including pinions 9.1 meshing with the first and second bevel gears 8, 10. The cage 9 is coupled to the intermediate shaft 13, to which is splined a take-off gear 2. The take-off gear 2 itself is coupled to the output gear 1 and, therefore, the output shaft 1.1. The second bevel gear 10 is splined to be second driven gear 11, whereas the first bevel gear 8 is coupled to the first driven gear 4 through a one-way overrunning clutch. Consequently, the transmission shown in Figs. 1, 1a is referred to as a "bevel-bevel" transmission.

The overrunning clutch comprises a tubular outer clutch slipper 7, and a tubular inner clutch body 5 provided within the clutch slipper 7 and being splined to the first non-circular driven gear 4. As shown in the breakout diagram of Fig. 1, the inner tubular surface of the clutch slipper 7 and the outer tubular surface of the clutch body 5 define a plurality of spiral channels in which are retained a plurality of clutch rollers 6. Consequently, the overrunning clutch will lock in one direction and will free-wheel in the opposite direction.

The operation of the prior art infinitely-variable transmission shown in Fig. 1 can be understood by referring to the diagrams shown in Fig. 1b. Diagram 1 of Fig. 1b shows the variation in velocity ratio W₄ of the pair of first non-circular gears 3,4, the variation in velocity ratio W₁₁ of the pair of second non-circular gears 12, 11, and the variation in velocity ratio R through the transmission over one revolution of the inputs shaft 3.1, 12.1 when the first non-circular gears 3,4 are in phase with the second non-circular gears 12, 11. As will be apparent, the velocity ratio of the first non-circular gears 3,4 increases linearly over the first 220° of input shaft rotation, and then decreases non-linearly over the subsequent 140° of input shaft rotation.

The velocity ratio R is given by the equation R = (W₄ + W₁₁)/2. Consequently, the velocity ratio of the second non-circular gears 12, 11 decreases linearly over the first 220° of input shaft rotation at the same rate as the velocity ratio of the first non-circular gears 3,4 increase during this interval to provide a constant velocity ratio R. The velocity ratio of the second non-circular gears 12, 11 increases over the subsequent 140° of input shaft rotation.

As shown in Diagram 1, the velocity ratio R does remain constant at 1.0 over the first 220° of input shaft rotation, as expected. Thereafter, the intermediate shaft 13 overruns the first bevel gear 8, causing the first and second non-circular gear pairs to become uncoupled from the input and output shafts. Consequently, after this point and until the input shafts return to their starting position, the variable-ratio gear assembly does not transfer any torque to the output shaft 1.1. However, each of the three other variable-ratio gear assemblies (not shown) will begin operating in sequence after each 90° of input shaft rotation. Consequently, the velocity ratio R of the transmission remains constant at 1.0 over the entire 360° revolution of the input shafts 3.1, 12.1.

Diagram 2 shows the variation in the velocity ratio W₄ of the pair of first non-circular gears 3.4, the variation in the velocity ratio W₁₁ of the pair of second non-circular gears 12, 11, and the variation in velocity ratio R through the transmission over one revolution of the input shafts 3.1, 12.1 when the second non-circular gears 12, 11 are advanced 110° relative to the first non-circular gears 3.4. With this phase angle, the velocity ratio R of the transmission drops to 0.75 for the period in which the overrunning clutch is locked. This interval coincides with the common interval in which the velocity ratios of the first and second non-circular gear pairs vary linearly so as to provide a constant velocity ratio R.

Diagram 3 shows the variation in velocity ratios of the pair of first non-circular gears 3,4 and the pair of second non-circular gears 12, 11, and the variation in velocity ratio R through the transmission over one revolution of the input shafts 3.1, 12.1 when the second non-circular gears 12, 11 are delayed 110° relative to the first non-circular gears 3.4, and the orientation of the overrunning clutch is reversed. With this phase angle, the velocity ratio R of the transmission increases to 1.25 for the interval in which the overrunning clutch is locked. Again, this interval coincides with the common interval in which the velocity ratios of the first and second non-circular gear pairs vary linearly so as to provide a constant velocity ratio R. Consequently, it will be seen that the amplification of the "bevel-bevel" transmission can change by 33% in one direction (between 110° and 0°), and 25% in the opposite direction (between 0° and-110°).

Fig. 1c shows another prior art infinitely-variable transmission, which is substantially identical to the transmission shown in Figs. 1, 1a, except that the first non-circular gear 4 days splined to the intermediate shaft 13 and the cage 9, while the second bevel gear 10 is coupled to the take-off gear 2. Consequently, the transmission shown in Fig. 1c is referred to as a "bevel-carrier" transmission.

Diagrams 1, 2 and 3 of Fig. 1d show the variation in velocity ratio W₄ of the pair of first non-circular gears 3,4, the variation in velocity ratio W₁₁ of the pair of second non-circular gears 12, 11, and the variation in velocity ratio R through the transmission over one revolution of the inputs shaft 3.1, 12.1. As will be apparent, the velocity ratio of the first non-circular gears 3,4 increases linearly over the first 220° of input shaft rotation, and then decreases non-linearly over the subsequent 140° of input shaft rotation.

The velocity ratio R is given by the equation R = 2W₁₁ - W₄. Consequently, the velocity ratio of the second non-circular gears 12, 11 also increases linearly over the first 220° of input shaft rotation to provide a constant velocity ratio R over this interval. The velocity ratio of the second non-circular gears 12, 11 decreases over the subsequent 140° of input shaft rotation.

As shown in Diagram 1, the velocity ratio R does remain constant at 1.0 over the first 220° of input shaft rotation, as expected. Thereafter, the intermediate shaft 13 overruns the first bevel gear 8, causing the first and second non-circular gear pairs to become uncoupled from the input and output shafts.

The velocity ratios R for phase angles of +110° and -110° are shown in Diagrams 2 and 3, respectively, of Fig. 1d. From these diagrams it will be apparent that the interval in which the overrunning clutch is locked coincides with the common interval in which the velocity ratios of the first and second non-circular gear pairs vary linearly so as to provide a constant velocity ratio R. From these diagrams, it will also be apparent that the amplification of the "bevel carrier" transmission shown in Fig. 1c can change 50% in one direction and 100% in the opposite direction (with the orientation of the overrunning clutch reversed).

Fig. 1e shows another prior art infinitely-variable "bevel-carrier" transmission, which is substantially identical to the "bevel carrier" transmission shown in Fig. i c, except that the differential has a gear ratio of 2:1. As shown in Fig. 1f, the amplification of the "bevel-carrier" transmission shown in Fig. 1e has changed 200% in one direction with infinite translation in the opposite direction (with the orientation of the overrunning clutch reversed).

Turning now to Fig. 2, 2a, one variable-ratio gear assembly of an infinitely-variable transmission 100, according to a first embodiment of the present convention, is shown. As above, the transmission 100 includes four identical variable-ratio gear assemblies which are disposed preferably at equal angular intervals around the input shaft 3.1 and the output shaft 1.1, although they may be disposed at unequal angular intervals with a possible reduction in performance. For convenience, only one variable-ratio gear assembly is shown.

The infinitely-variable transmission 100 comprises a "bevel-bevel"-type transmission, similar in structure to the infinitely-variable "bevel-bevel" transmission shown in Fig. 1, 1a. However, unlike the "bevel-bevel" transmission shown in Fig. 1, 1a, the cage 5 of the one-way overrunning clutch is replaced with a sleeve 5.1 provided around the intermediate shaft 13 and splined to the first non-circular driven gear 4. Also, each variable-ratio gear assembly of the transmission 100 includes a programmable multi-directional coupling and an actuator, in replacement of the one-way overrunning clutch.

The multi-directional coupling was described in published PCT Patent Application No. 98/01072, and comprises a travelling inner conical race 20 coupled to the sleeve 5.1 through a ball spline bx, a tubular outer clutch body 22 coupled to the first bevel gear 9.1, and a conical inner slipper 21 provided between the conical race 20 and the clutch body 22. The conical race 20 includes an outer conical friction surface, and the slipper 21 includes an inner conical friction surface which meets with the conical friction surface of the conical race 20. The slipper 21 includes an outer bearing surface, and the clutch body 22 includes an inner bearing surface which, together with the outer bearing surface of the slipper 21, defines a channel between the slipper 21 and the clutch body 22. The channel includes a plurality of pockets for retaining roller elements 6 therein, disposed in abutment against the bearing surfaces. Consequently when the conical race 20 is pressed axially inwards into the coupling while rotating relative to the clutch body 22, the outer friction surface of the race 20 engages in the inner friction surface of the slipper 21, causing the roller elements 6 to roll up their respective pockets and to press the slipper 21 inwardly against the conical race 20, thereby locking the conical race 20 to the clutch body 22 in both directions. Conversely, when the conical race 20 is pulled axially from the coupling, the roller elements 6 roll down their respective pockets causing the slipper 21 to retract from the conical race 20, thereby allowing the conical race 20 to rotate relative to the clutch body 22 in both directions.

The actuator serves to insert and withdraw the conical race 20 from the coupling, to thereby couple and uncouple the first non-circular gears 3,4 and the second non-circular gears 12, 11 to and from the input and output shafts. The actuator comprises a first shadow disc cam 16 coupled to the first input shaft 3.1, a second shadow disc cam 16b coupled to the second input shaft 12.1. a shadow cam follower plate 17 rotatably disposed around the sleeve 5.1 and including a plurality of apertures extending therethrough, a plurality of double-ended decoupling cone pins 19 disposed within the apertures, a stationary end ring 18 splined to the sleeve 5.1 provided between the first non-circular driven gear 4 and the shadow cam follower plate 17, a travelling end ring 24 splined to the sleeve 5.1 provided between one end of the conical race 20 and the shadow cam follower plate 17. and a spring s1 provided adjacent the opposite end of the conical race 20. The shadow disc cams 16, 16a rotate against the shadow cam follower plate 17, each including a cam lobe which is synchronized with the nonlinear portions of the velocity ratios of the respective non-circular gear pairs 3, 4; 12, 11.

As the cam lobe rotates against the cam follower plate 17, the cam follower plate 17 is pushed upwards by the cam lobe, causing the travelling end ring 24 to eject the conical race 20 from the multi-directional coupling and thereby uncouple the first bevel gear 8 from the first non-circular driven gear 4. After the cam lobe rotates away from the cam follower plate 17, the cam follower plate 17 moves downwards, causing the conical race 20 to be pressed into the coupling via the force exerted by the spring s1.

Subdiagrams a) and b) of Fig. 2b respectively depict the first non-circular gears 3, 4, and the corresponding shadow disc cam 16. Subdiagrams c) and d) of Fig. 2b respectively depict the second non-circular gears 12, 11, and the corresponding shadow disc cam 16a when the phase angle between the first and second non-circular gears is 0°, +110° and - 110°. Subdiagram e) of Fig. 2b shows that the common angular period during which both of the first and second non-circular gears are coupled to the input and output shafts coincides with the angular interval in which the acceleration of both the first and second non-circular gear pairs is constant. As discussed above, the requirement ensures that the velocity ratio R of the transmission remains constant over the period in which the first and second non-circular gear pairs are coupled to the input and output shafts. The interval during which the first and second non-circular gear pairs are uncoupled from the input and output shafts occurs when the acceleration of either or both of the first and second non-circular gears is nonuniform. Since the shadow disc cams 16, 16a are coupled to the input shafts 3.1, 12.1, this latter angular interval coincides with the non-linear portions of the pitch circles of the drive gears 3, 12. As will be discussed below, the angular interval in which the first and second non-circular gear pairs are uncoupled from the input and output shafts may also coincide with the non-linear portions of the pitch circles of the driven gears 4, 11.

The graph shown in Fig. 2b depicts the variation in velocity ratios of the pair of first non-circular gears 3,4 and the pair of second non-circular gears 12, 11, and the variation in velocity ratio R through the transmission 100 over one revolution of the inputs shaft 3.1, 12.1 when the second non-circular gears 12, 11 lead the first non-circular gears 3,4 by 110°, and lag the first non-circular gears 3,4 by 110°. As will be apparent, the velocity ratio R through the transmission 100 remains constant at 0.75 when the phase angle is +110°, and increases to 1.25 when the phase angle is -110°. Consequently, the amplification of the transmission 100 is 166%, which represents a dramatic improvement over the prior art. Further, as the multi-directional couplings can lock and free-wheel in both directions, the transmission 100 can take advantage of engine braking. Therefore, the output shaft 1.1 may act as a torque input member, with the input shafts 3.1, 12.1 acting as torque output members, if so desired. In this instance, the differential would act as a torque splitter which splits the input torque between the first non-circular gear pair and the second non-circular gear pair.

Fig. 2c shows an infinitely-variable "bevel-carrier" transmission 200, according to a second embodiment of the present convention. The infinitely-variable transmission 200 is substantially identical to the "bevel-carrier" transmission shown in Fig.1c, except that the cage 5 of the one-way overrunning clutch is replaced with a sleeve 5.1 provided around the intermediate shaft 13 and splined to the first non-circular driven gear 4. and the one-way overrunning clutch is replaced with a programmable multi-directional coupling and an cam-follower actuator. As shown in Fig. 2d, the amplification of the transmission shown in Fig. 2c has a changed to 300% in both directions, which again represents a dramatic improvement over the prior art.

Fig. 2e summarizes the non-circular gear pairs for the "bevel-bevel" transmission 100, and the "bevel-carrier" transmission 200. Diagrams a) and b) of Fig. 2e depict the first and second non-circular gear pairs for the "bevel-bevel" transmission 100. The first non-circular gear pairs 3, 4 for the "bevel-bevel" transmission 100 are shown being of the same size as the second non-circular gear pairs 12, 11, except that the second non-circular gears 12, 11 are flipped over and rotated 180° to provide the velocity ratio profiles shown in Fig. 2b. Diagrams b) and c) of Fig. 2e depict the first and second non-circular gear pairs for the "bevel-carrier" transmission 200. The first non-circular gear pairs 3, 4 for the "bevel-bevel" transmission 200 are oriented the same way as the second non-circular gear pairs 12, 11, but produce twice the angular acceleration as the second non-circular gears 12, 11 to provide the velocity ratio profiles shown in Fig. 2b.

Numerous variations of the foregoing embodiments may be realized. Fig. 2f shows an infinitely-variable "bevel-carrier" transmission 300, according to a third embodiment of the invention. The "bevel-carrier" transmission 300 is substantially identical to the "bevel-carrier" transmission shown in Fig.le, except that the cage 5 of the one-way overrunning clutch is replaced with a sleeve 5.1 provided around the intermediate shaft 13 and splined to the first non-circular driven gear 4, and the one-way overrunning clutch is replaced with a programmable multi-directional coupling and an cam-follower actuator. Due to the 2:1 gear ratio of the differential, the first and second non-circular gear pairs can produce the same angular acceleration. The amplification characteristics of the transmission 300 are similar to those the transmission shown in Fig. 1e in so far as the transmission 300 is capable of producing infinite translation. As will be discussed below, this feature is advantageous when the transmission 300 is used in an automobile since it allows the output torque of the transmission 300 to drop to zero when the vehicle is stopped.

Fig. 2g shows an infinitely-variable "bevel-carrier" transmission 400 which is identical to the "bevel-carrier" transmission 200 shown in Fig. 2c, except that the differential is replaced with a planetary gear set comprising an annulus 8, a pinion 10, a cage 9 and a planet 9.1. With the annulus/pinion ratio set equal to the ratio of the first and second bevel gears 8, 10 of the differential, the amplification of the transmission 400 will be the same as that for the transmission 200.

Fig. 2h shows an infinitely-variable "bevel-carrier" transmission 500 which is substantially identical to the "bevel-carrier" transmission 400 shown in Fig. 2g, except that the differential is replaced with a coplanar reverted geartrain loop. The coplanar reverted geartrain loop was disclosed in published PCT Patent Application 98/01019, and comprises a pinion 10, an annular internal gear 8 disposed around the pinion 10 and being coaxial to the pinion 10, and a cage assembly 9 including a ring gear 9.1. The ring gear 9.1 includes an inner surface which engages the pinion 10, and an outer surface which engages the angular gear 8. The cage assembly 9 also includes an eccentric guide for disposing of a ring gear 9.1 coplanar to and eccentrically with respect to the pinion 10 and the angular gear 8. With the annulus/pinion ratio set equal to the ratio equal to 3/2, the amplification of the transmission 500 will be the same as that for the transmission 200.

Thus far, all of the foregoing embodiments have employed a coupling including an inner conical race 20, as shown above and reproduced in Fig. 3c. However, the invention is not so limited. Rather, the coupling may include instead an outer conical race 20, a tubular inner clutch body 22, and a conical slipper 21 provided between the outer conical race 20 and the inner clutch body 22, as shown in Figs. 3a, 3b. Alternately. rather than the actuator inserting and withdrawing the conical race 20 from the coupling, the actuator may instead insert and withdraw the slipper 21 from the coupling, as shown in Figs. 3b, 3d. Numerous other variations of the coupling will be apparent to those skilled in the art.

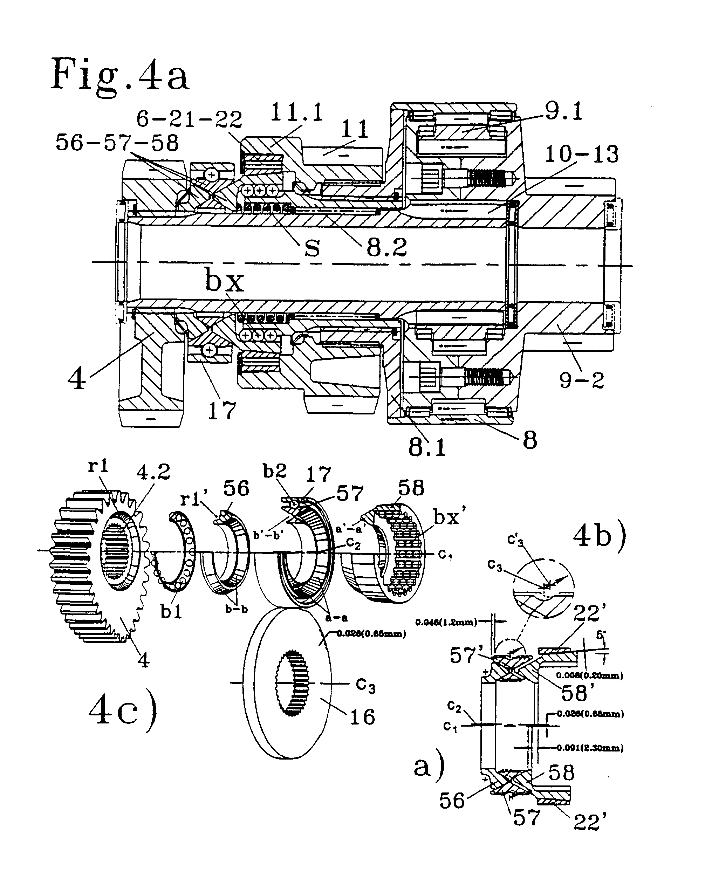

Also, all of the actuators described thus far herein for coupling and uncoupling the first and second non-circular gear pairs to and from the input and output shafts have comprised shadow disc cams 16, 16a driving a plurality of double-ended decoupling cones 19. However, other actuator implementations are possible. One such implementation is shown in Figs. 4a - 4c, and comprises a pair of shadow disc cams 16, 16a coupled to respective input shafts 3.1, 12.1, an annular shadow cam follower plate 17 in abutment with the shadow disc cams 16, 16a, a decoupler disc 57 disposed within the cam follower plate 17 and including V-grooves provided on both end faces of the decoupler disc 57, and roller bearings b2 provided between the cam follower plate 17 and the decoupler disc 57 for allowing the cam follower plate 17 to rotate relative to the decoupler disc 57. The actuator also includes an axially-fixed annular cone race 56 provided between the first non-circular driven gear 4 and the shadow cam follower plate 17 and including an axial cone mating with the V-groove on one end face of the decoupler disc 57, and a travelling annular cone race 58 provided between the coupling and the shadow cam follower plate 17 and including an axial cone mating with the V-groove on the opposite end face of the decoupler disc 57. Also, the travelling annular cone race 58 includes an axially-extending conical flange opposite the axial cone portion thereof which is splined to the annular gear 8 through ball splines bx and replaces the conical race 20 of the coupling.

The actuator shown in Figs. 4a - 4c operates in a similar fashion to the actuators described above. As the cam lobe rotates against the cam follower plate 17, the cam follower plate 17 is pushed upwards by the cam lobe, causing the travelling cone race 58 to move laterally away from the cam follower plate 17, thereby uncoupling the annular gear 8 from the second non-circular driven gear 11. After the cam lobe rotates away from the cam follower plate 17, the cam follower plate 17 moves downwards, causing the travelling cone race 58 to move laterally towards the cam follower plate 17, thereby coupling the annular gear 8 to the second non-circular driven gear 11.

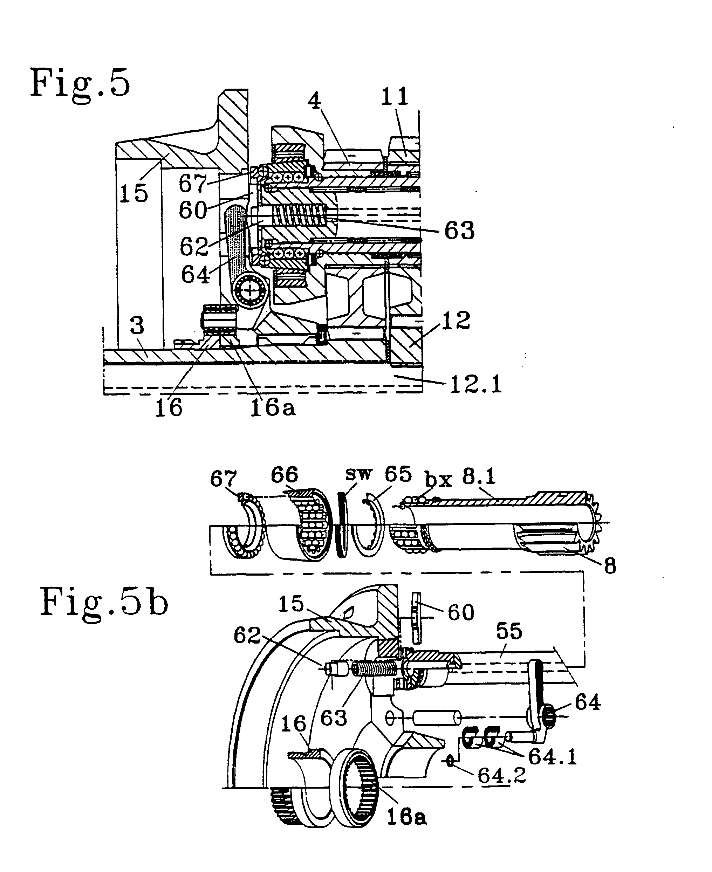

Figs. 5a - 5b depict another actuator implementation which replaces the cam follower plate 17 and the associated races 56, 58 with a rocker arm 64, a tappet 60 and coil spring 63. Whenever a cam lobe presses upwards against the rocker arm 64, the rocker arm 64 presses against the tappet 60 thereby forcing the conical slipper 20 out of the coupling. When the cam lobe moves away from the rocker arm 64, the spring 63 releases the pressure on the conical slipper 20 by the tappet 60. causing the conical slipper 20 to be drawn into the coupling. The advantage of this variation is that the rocker arm 64 provides a mechanical advantage which permits a shallower rise on the shadow disc cams.

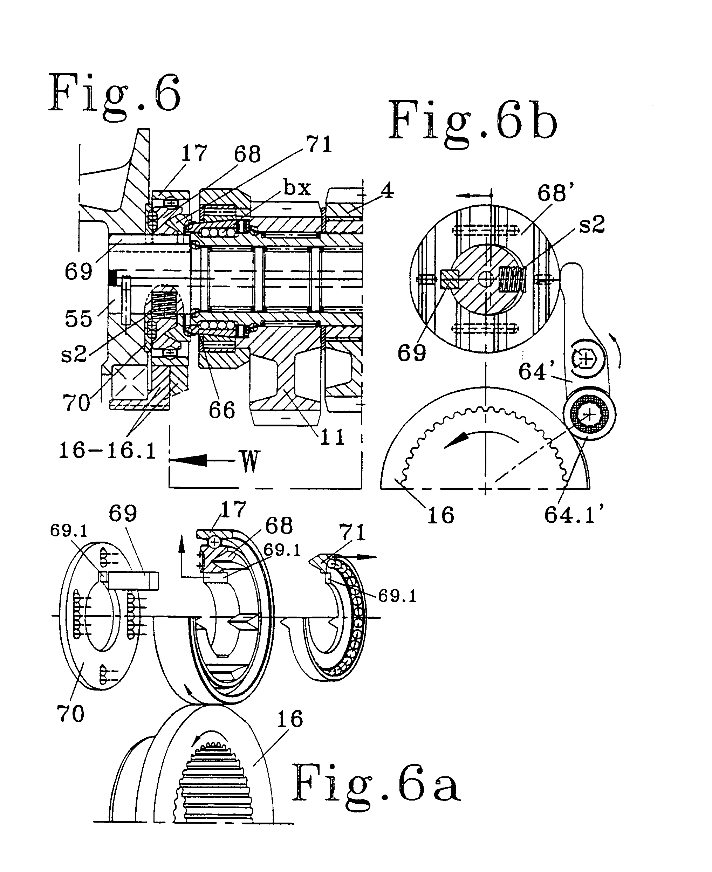

Figs. 6, 6a depict an actuator similar to the actuator shown in Figs. 4a - 4c, comprising a cam follower platen 68 disposed within the cam follower plate 17 and including V-grooves provided on one end face of the cam follower platen 68, and roller bearings provided between the cam follower plate 17 and the cam follower platen 68 for allowing the cam follower plate 17 to rotate relative to the cam follower platen 68. The actuator also comprises an axially-fixed bearing end plate 70 provided between the first non-circular driven gear 4 and the shadow cam follower plate 17 and including a key 69 for preventing rotation of the cam follower platen 68, and a travelling bearing end plate 71 provided between one end of the conical race 20 and the shadow cam follower plate 17 and including an axial cone mating with the V-groove on the cam follower platen 68.

The actuator shown in Fig. 6b is similar to the actuator shown in Figs. 5a - 5b, comprising a rocker arm 64' and a platen 68' which lie in the same plane as the cam followers 16a. 16b. Also, the cam follower plate 17 is eliminated in this variation. The platen 68' includes ribs for engaging the conical race 20. Whenever a cam lobe presses outwards against the rocker arm 64', the rocker arm 64' forces the platen 68' to move transversely to the axis of rotation of the intermediate shaft 13, thereby causing the ribs of the platen 68' to engage the conical slipper 20 and forcing the conical slipper 20 into the coupling. The advantage of this variation is that the actuator is not affected by centrifugal forces from rotation of the shadow disc cams.

All of the actuators described thus far herein have comprised shadow disc cams 16, 16a together with means for transferring the cam action of the shadow disc cams to the coupling, and have shadowed the non-linear portions of the pitch circles of the first and second driving gears 3, 12. Figs. 7 to 10 depict actuators employing shadow bearing cams for coupling and uncoupling the first and second non-circular gear pairs to the input and output shafts, and which shadow the non-linear portions of the pitch circles of the first and second driven gears 4, 11. The actuator shown in Figs. 7, 7b, 7c is shown being used in association with a "bevel-carrier" transmission which uses a coplanar reverted gear train loop 77 for transmitting torque between the first and second non-circular gear sets, and the input and output shafts. The annular gear is splined to the first driven gear 4, the pinion is splined to the second driven gear 11, and the cage assembly of the coplanar reverted gear train loop 77 is coupled to the output gear 2 through the coupling.

The actuator comprises a stationary platen cage 74 disposed around the intermediate shaft 13 and including a first and second thru-ports 74, 75, a first movable ball follower 88 provided within the first thru-port 74, and a second movable ball follower 88' provided within the second thru-port 75. The actuator also includes a first axial ball cam race 72 coupled to the first driven gear 4 and being in communication with the first thru-port 74, a second axial ball cam race 73 coupled to the second driven gear 12 and being in communication with the second thru-port 75, and an axial ball follower race 81 coupled to the conical slipper 20 of the coupling and being in communication with the thru-ports 74, 75. The axial ball cam races 72, 73 are concentric to each other. Also, each of the axial ball cam races 72, 73 includes a raised race portion which is synchronized with the non-linear portion of the pitch circle of the respective driven gear for uncoupling the first and second non-circular gears from the input and output shafts when the acceleration of either of the non-circular gear pairs is non-uniform. Fig. 7a depicts the raised race portions of the axial ball cam races 72, 73 for the respective non-circular gear pairs.

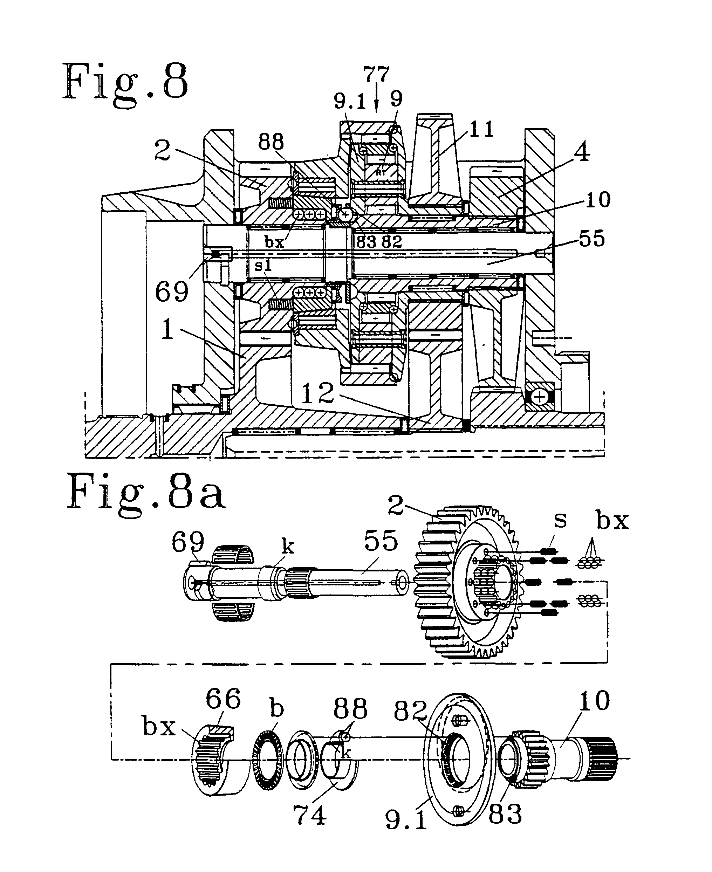

The actuator shown in Figs. 8, 8a is shown being used in association with a "bevel-bevel" transmission which uses a coplanar reverted gear train loop 77 for transmitting torque between the first and second non-circular gear sets, and the input and output shafts. The pinion 10 of the coplanar reverted gear train loop 77 is rotatably disposed around a fixed countershaft 55 and is splined to the first driven gear 4. The cage assembly 9.1 is splined to the second driven gear 11. The annular gear is coupled to the output gear 2 through the coupling.

The actuator comprises a first bearing half-race 83 provided on a shoulder of the pinion 10, and a second bearing half-race 82 disposed adjacent the radially innermost shoulder of the cage assembly 9.1. The pinion 10 is rotatably disposed within the cage assembly 9.1 such that the first and second bearing half-races 82, 83 together comprise a full bearing race. The actuator also includes a single ball follower 88 provided within the full bearing race, and a stationary ball follower guide 74 provided between ball follower 88 and the conical race 20 of the coupling. Also, the first and second bearing half-races 82, 83 each include a raised race portion which is synchronized with the non-linear portion of the pitch circle of the respective driven gear for uncoupling the first and second non-circular gears from the input and output shafts when the acceleration of either of the non-circular gear pairs is non-uniform.

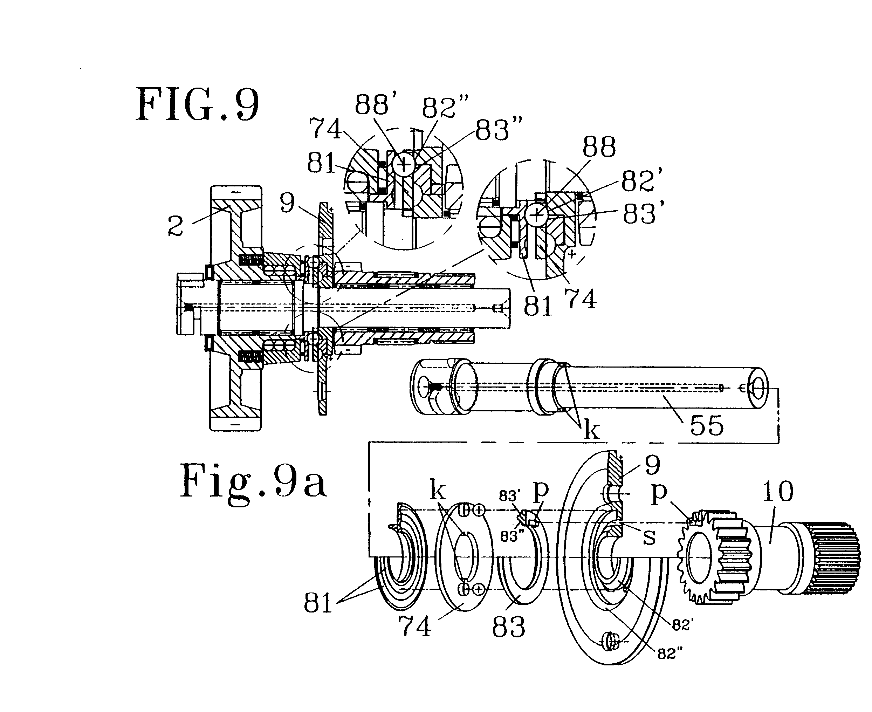

The actuator shown in Figs. 9, 9a is similar to the actuator shown in Fig. 8, 8a, comprising a first bearing half-race 80 and a second bearing half-race 82 concentric with the first bearing half-race 80, both provided adjacent the radially innermost shoulder of the cage assembly 9.1. The actuator also comprises a ball cam riser 83 including a first riser half-race 83' and a second riser half-race 83" concentric with the first riser half-race 83'. The ball cam riser 83 is retained in a channel within the cage assembly 9.1, and includes a key which extends through the cage assembly 9.1 and engages a mating key on the second bevel gear 10 to allow the ball cam riser 89 to rotate with the second bevel gear 10. The first bearing half-race 80 and the first riser half-race 83' together comprise a first axial ball cam race. Similarly, the second bearing half-race 82 and the second riser half-race 83" together comprise a second axial ball cam race. The actuator also includes a stationary ball follower platen 74 including a pair of thru-ports for receiving a movable ball follower therein, and a follower ball race plate 81. The stationary ball follower platen 74 is keyed to the fixed countershaft 55. The follower ball race plate 81 is coupled to the outer conical slipper of the coupling, and includes a pair of ball follower races coinciding with the first and second axial ball cam races. Also, the first plate half-race 80 and the second riser half-race 83" each include a raised race portion which is synchronized with the non-linear portion of the pitch circle of the respective driven gear for uncoupling the driven gears 4, 11 from the input and output shafts when the acceleration of either of the non-circular gear pairs is non-uniform.

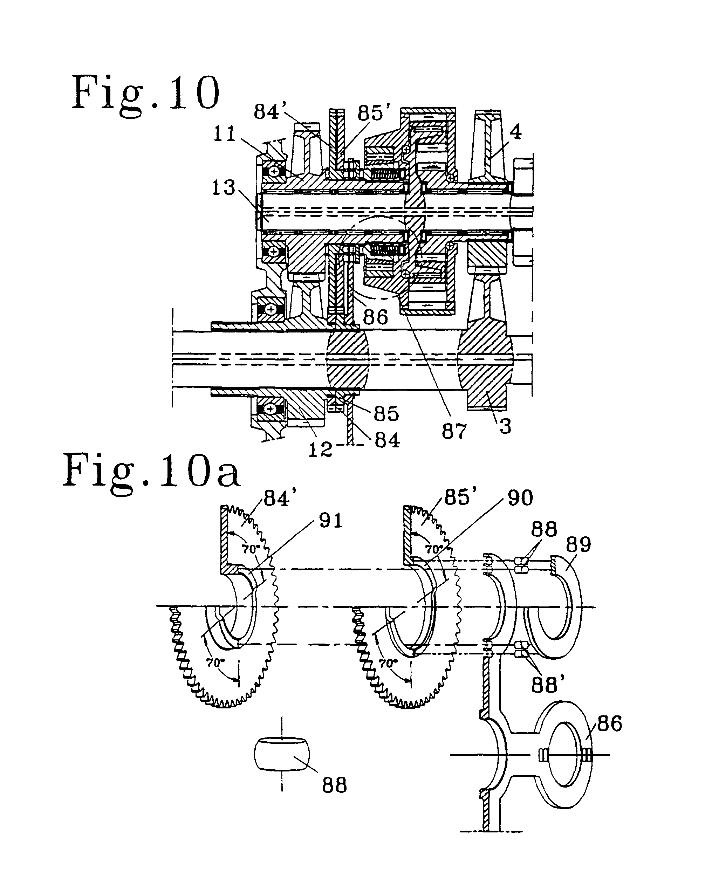

The actuator shown in Figs. 10, 10a is shown being used in association with a "bevel-carrier" transmission which uses a coplanar reverted gear train loop for transmitting torque between the first and second non-circular gear sets, and the input and output shafts. The pinion of the coplanar reverted gear train loop is splined to the first driven gear 4. The cage assembly is fixed to the intermediate shaft 13. The annular gear is coupled to the second driven gear 11 through the coupling.

The actuator comprises a first centre axis gear 85 coupled to the first driving gear 3, a second centre axis gear 84 coupled to the second driving gear 12, a first intermediate gear 85' rotatably disposed around the intermediate shaft 13 and meshing with the first centre axis gear 85, a second intermediate gear 84' rotatably disposed around the intermediate shaft 13 and meshing with the second centre axis gear 84, and a ball follower guide 86 disposed around the intermediate axis 13 between the intermediate gears 84', 85' and the conical slipper of the coupling. The ball follower guide 86 includes a pair of apertures for receiving truncated ball followers 88 therein. Also, the first and second intermediate gears 84', 85' each include a respective axially-extending riser portion 91, 90 which is synchronized with the non-linear portion of the pitch circle of the respective driving gear for uncoupling the first and second non-circular gears from the input and output shafts when the acceleration of either of the non-circular gear pairs is non-uniform.

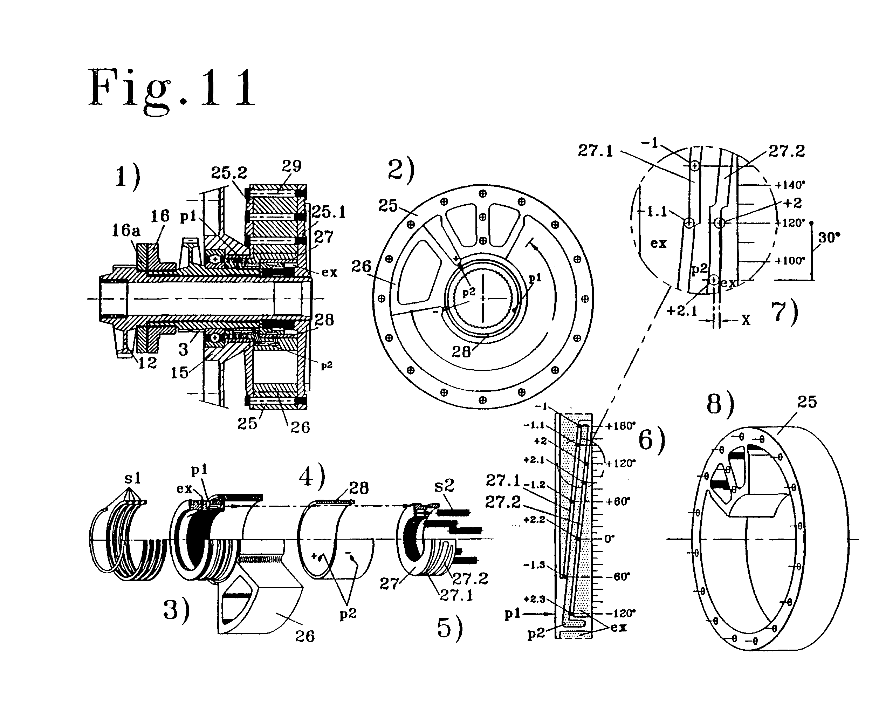

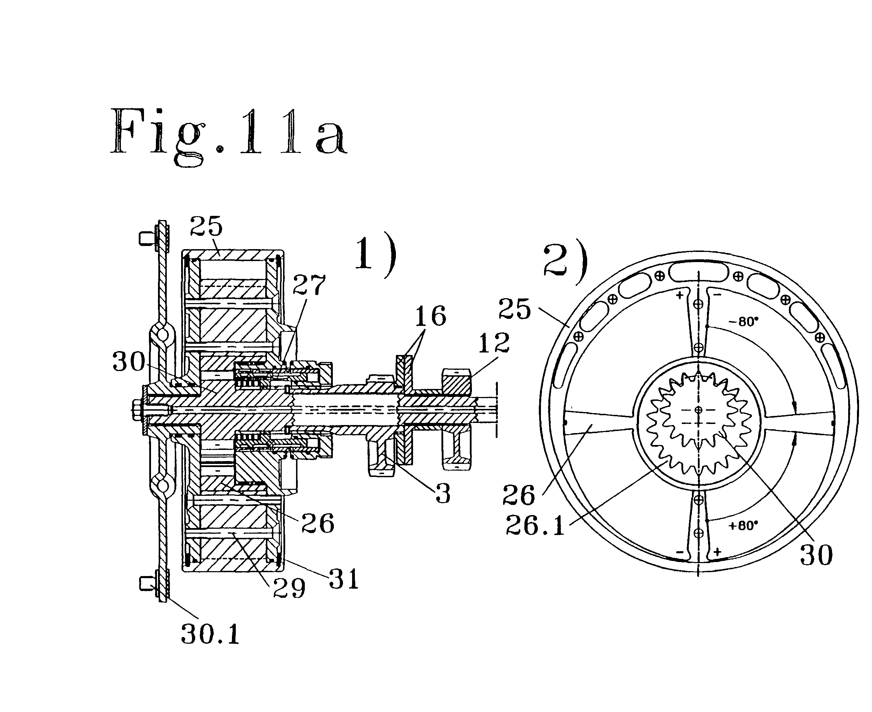

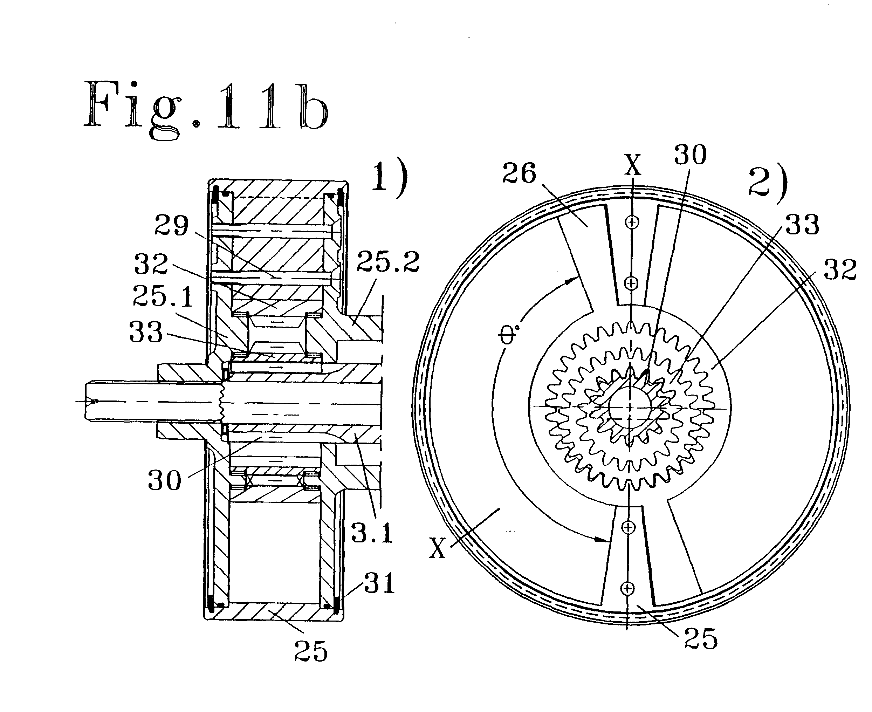

Having described various implementations of the variable ratio non-circular gear pairs, the multi-directional coupling and the actuator, an implementation of the phase angle variator for rotating the second non-circular gear pair 12,11 relative to the first non-circular gear pair 3, 4 will now be discussed with reference to Fig. 11. The phase-angle variator shown in Fig. 11 is a hydraulically-operated variator, and comprises a stator 25 splined to the first input shaft 3.1, and a rotor 26 provided within the stator 25. The rotor 26 rotates about an axis which is eccentric to the centre of the stator 25, and includes a lobe extending radially outwards from the rotor body to the inner surface of the stator 25. The rotor 26 includes a cylindrical axial extension 26.1 splined to the second input shaft 12.1 incorporating an aperture p 1 for receiving pressurized hydraulic fluid, and a sleeve 28 pressure fitted within the rotor 26. The phase angle variator also includes an oil spool 27 splined to the first input shaft 3.1 and being positioned inside the rotor 26 within the sleeve 28. The oil spool 27 includes a plurality of spiral fluid passageways provided between lands 27.1, 27.2 disposed around the circumference of the oil spool 27. The sleeve 28 includes fluid ingress and egress ports +, - for passing pressurized fluid p2 to and from the fluid passageways. The phase angle variator also includes a plurality of springs s2 provided against one end of the oil spool 27 for urging the oil spool 27 into the rotor 26.

In operation, pressurized hydraulic fluid is applied to the aperture p 1 of the rotor 26, thereby urging the oil spool 27 to move axially relative to the rotor 26 in opposition to the force exerted on the oil spool 27 by the springs s2. As the oil spool 27 moves axially, the lands 27.1, 27.2 are displaced a distance from the fluid ingress and egress ports +, - thereby allowing fluid to enter the fluid passageways. The pressurized fluid in the fluid passageways causes the rotor 26 (and the first input shaft 3.1) to rotate relative to the second input shaft 12.1 until such time as the lands 27.1, 27.2 are rotated into a position which seals off the fluid ingress and egress ports +. -. As will be appreciated, the direction of rotation of the rotor 26 depends on the whether the pressurized fluid p2 is applied to the fluid port + or the fluid port-.

Diagram 6 of Fig. 11 shows an "unrolled" oil spool 27, depicting the lands 27.1,27.2, and shows the angular displacement of the oil spool 27 relative to the pressure of the hydraulic fluid at the port p1. As will be apparent, by controlling the pressure of the hydraulic fluid at the port p1, the phase angle between the first and second input shafts 3.1, 12.1 can be varied.

As discussed above, infinite translation is possible with the transmissions according to the present invention. For instance, the infinitely-variable "bevel-carrier" transmission 300 shown in Fig. 2f would have infinite translation when the phase angle is 110°. However, if the phase angle was not exactly 110°, and the transmission was fitted into an automobile, the automobile would be subject to creep. Diagram 7 of Fig. 11 shows a variation to the lands 27.1, 27.2 which is intended to prevent vehicle creep. The lands 27.1, 27.2 are modified by including respective non-spiral portions which are designed to seal off the fluid ingress and egress ports +, - when the phase angle is between approximately 90° and 120°. Consequently, within this angular range, the phase angle variator is disabled, and the reverse torque applied to the rotor 26 will cause the rotor 26 to rotate until the output of the transmission is zero.

Fig. 11a shows another hydraulically-operated variator, similar to the variator shown in Fig. 11, comprising a stator 25 splined to the first input shaft 3.1, and a rotor 26 provided within the stator 25 and being coupled to the second input shaft 12.1. However, unlike the variator shown in Fig. 11, the variator shown in Fig. 11 a includes two lobes extending radially outwards from the rotor body to the inner surface of the stator 25 for defining four pressurization chambers around the rotor 26 to obtain greater torque on the rotor 26. Also, the variator includes a pinion 30, and the rotor 26 includes an annular gear 26.1 coaxial with the axis of rotation of the rotor 26 to obtain greater torque for rotation of the second input shaft 12.1. Fig. 11b shows another hydraulically-operated variator, similar to the variator shown in Fig. 11a, except that the rotor 26 includes a cage assembly incorporating a ring gear 32 and an eccentric guide for meshing the outer gear surface of the ring gear 32 with the annular gear 26.1 and for meshing the inner gear surface of the ring gear 32 with the pinion 30. As will be apparent, the latter rotor structure resembles a coplanar reverted gear train loop. and eliminates the offset between the centre of the stator 25 and the axis of rotation of the rotor 26.

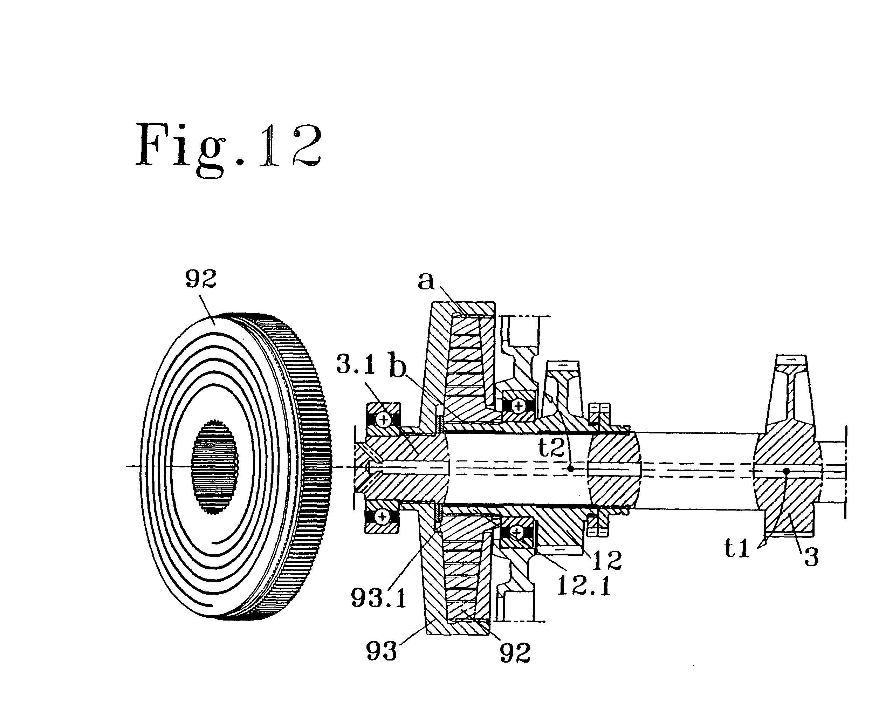

Fig. 12 shows a phase-angle variator which vanes the phase angle between the first and second variable ratio gear pairs in accordance with the torque present at the output shaft 1.1. The vanator compnses the first input shaft 3.1, the second input shaft 12.1, the first non-circular driven gear 3 splined to the first input shaft 3.1, and the second non-circular driven gear 12 splined to the second input shaft 12.1. The variator also includes a torsion spring housing 93 splined to the first input shaft 3.1, a torsion spring 92 disposed within the torsion spring housing 93 and being coupled between the first input shaft 3.1 at one end and the second input shaft 12.1 at the other end, and a stop 93.1 provided within the housing for limiting the magnitude of the phase angle between the first and second variable ratio gear pairs. In operation, with a prime mover rotating the first input shaft 3.1 with a torque t1, as shown in Fig. 12, and a load is applied to the output shaft 1.1, the second input shaft 12.1 will experience a reverse torque t2 which is proportional to the load applied. Consequently, the angle between the first and second variable ratio gear pairs will vary in accordance with the applied load and the spring constant of the torsion spring 92. As will be appreciated, as the applied load increase, preferably the second input shaft 12.1 rotates relative to the first input shaft 3.1 sufficiently so as to reduce the torque on the prime mover to an acceptable level.

It should also be pointed out that the width of the torsion spring housing 93 narrows with the radial distance from the input shafts. It is believed that this shape will bind the radially outermost portions of the torsion spring 92 to the torsion spring housing 93 so as to provide greater control over the phase angle.

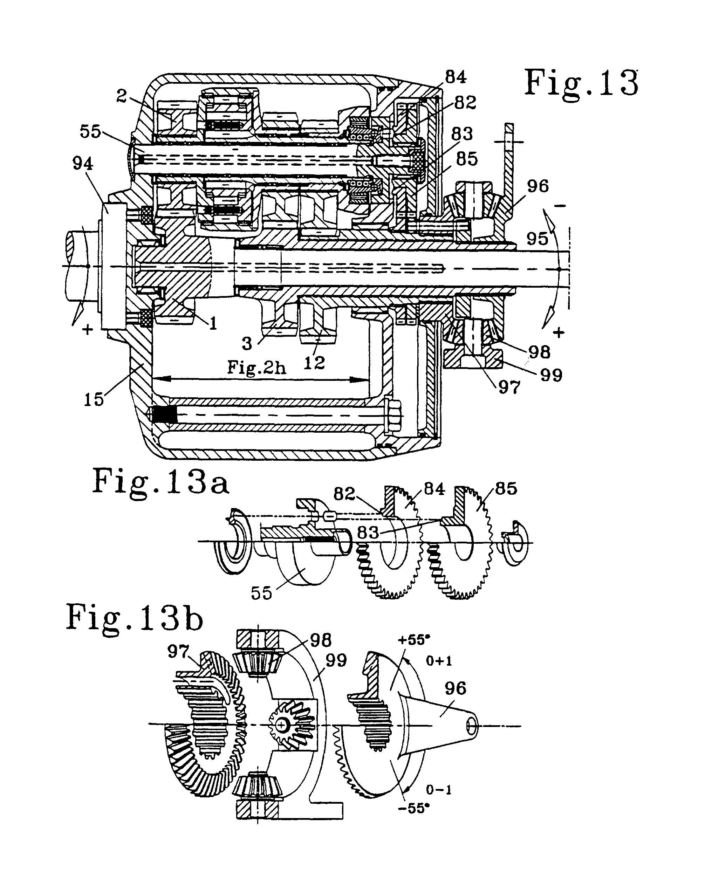

Figs. 13, 13a, 13b show a manually-operated variator which is suitable for use on farm vehicles, such as tractors. The transmission shown in Fig. 13 includes the "bevel-carrier" variable-ratio gear assembly described with reference to Fig. 2h, and the actuator described with reference to Fig. 10. The variator comprises a variator differential, comprising a bevel gear control arm 96 splined to the first non-circular driving gear 3, a variator bevel gear 97 splined to the second non-circular driving gear 12, and a cage 99 including a plurality of pinions 98 meshing with the bevel gear control arm 96 and the variator bevel gear 97. As will be appreciated, by driving the first input shaft 3.1 with a prime mover, the velocity ratio of the transmission can be controlled by rotating the control arm 96. Preferably, the magnitude of the phase angle is limited to 110° to avoid undesirable fluctuations in rotational output speed.

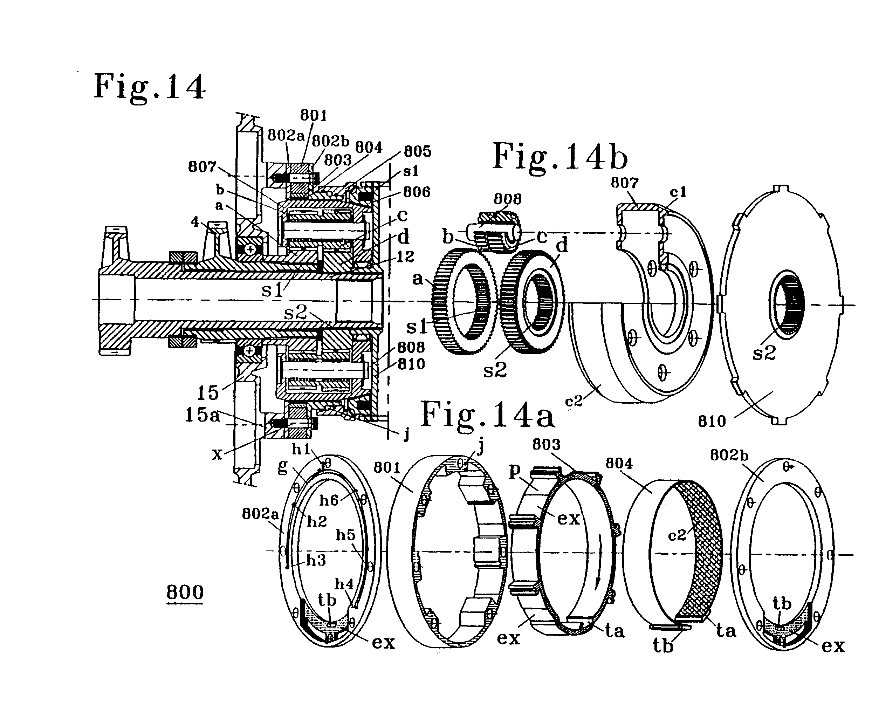

Fig. 14 shows an all-gear variator comprising a first control gear a splined to the first driven gear 4, a second control gear b splined to the second driven gear 11, a cage assembly 807 rotatably disposed about the input shafts 3.1, 12.1, and a spool 808 provided within the cage assembly 807 and retaining a gear pair 809 rotatable thereon. The gear pair 809 includes a first spool gear b meshing with the first control gear a, and a second spool gear c fixed to the first spool gear b and meshing with the second control gear d.

The variator includes a band clutch provided between the cage assembly 807 and the casing 15 of the transmission which acts as a brake for selectively preventing rotation of the cage assembly 807 relative to the casing 15. The band clutch comprises a clutch stator 801, a clutch rotor 803 provided within the clutch stator 801, end plates 802a, 802b, and a clutch band 804 provided within the clutch rotor 803 and being coupled between the clutch rotor 803 at one end and the clutch end plates 802 at the opposite end. The variator also includes a variator end plate 801 splined to the second input shaft 12.1, and a cone coupling 806 and associated cone actuator 805 for selectively preventing rotation of the cage assembly 807 relative to the second input shaft 12.1.

As will be apparent from Fig. 14, the diameter of the first control gear a is greater than the diameter of the second control gear d. Consequently, if the brake is activated and the input shafts 3.1, 12.1 are rotating in the same direction, a torque will be developed at the spool 808 while will force the second input shaft 12.1 to rotate ahead of the first input shaft 3.1, thereby increasing the phase angle. On the other hand, if the brake is released, the torque at the spool 808 will cause the cage assembly 807 to rotate, thereby forcing the second input shaft to move back towards the first input shaft 3.1, thereby decreasing the phase angle. Once the desired phase angle is reached, the cone coupling 806 is activated and the brake is released (if not already released), thereby preventing further movement of the second input shaft 12.1 relative to the first input shaft 3.1.

Thus far, the foregoing discussion has assumed that the non-circular gears 3, 4, 11, 12 have used standard involute-shaped gear teeth. Although the such gear teeth would be acceptable for use in the infinitely-variable transmissions of the present invention, the variations in the pitch circle diameters would give rise to variations in contact ratio between the driving non-circular gears 3. 12 and the associated driven non-circular gear 4, 11. Consequently the load which could be carried by the transmissions would be limited. Further, the variations in contact ratio would cause excessive gear noise. Therefore, it is desirable to have non-circular gears having constant contact ratio.

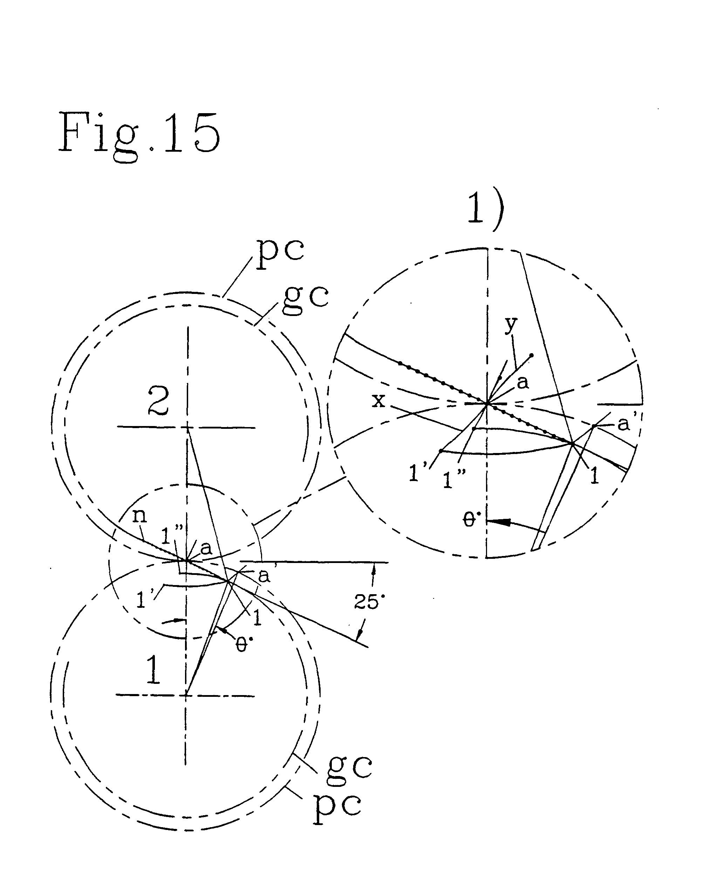

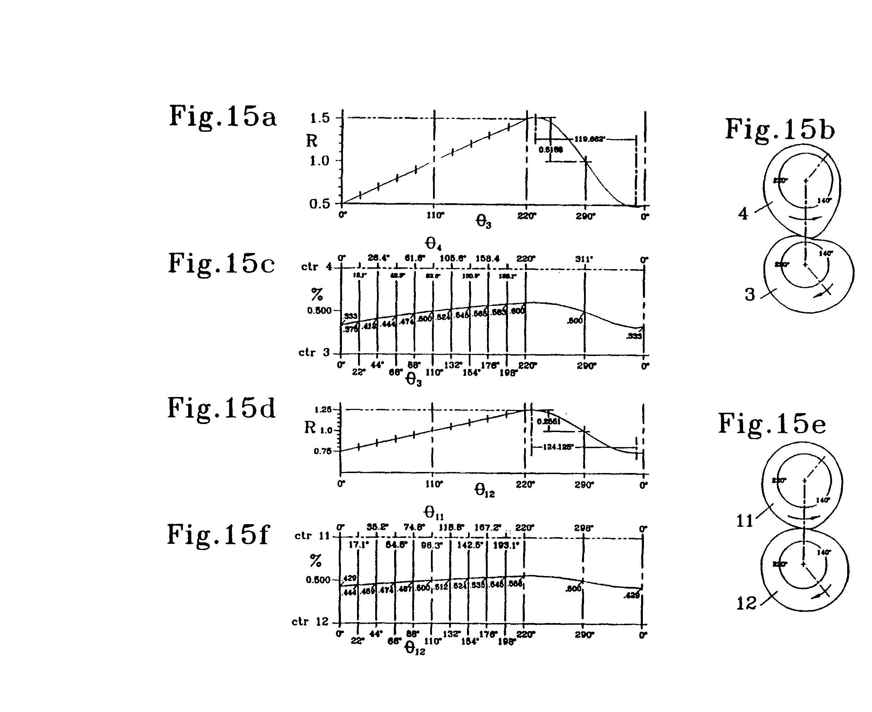

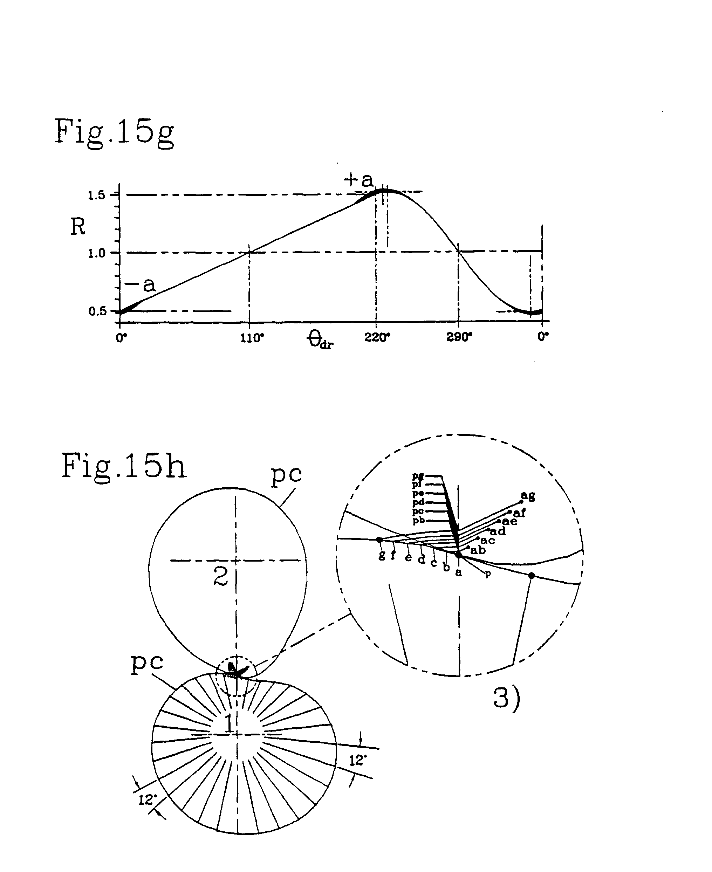

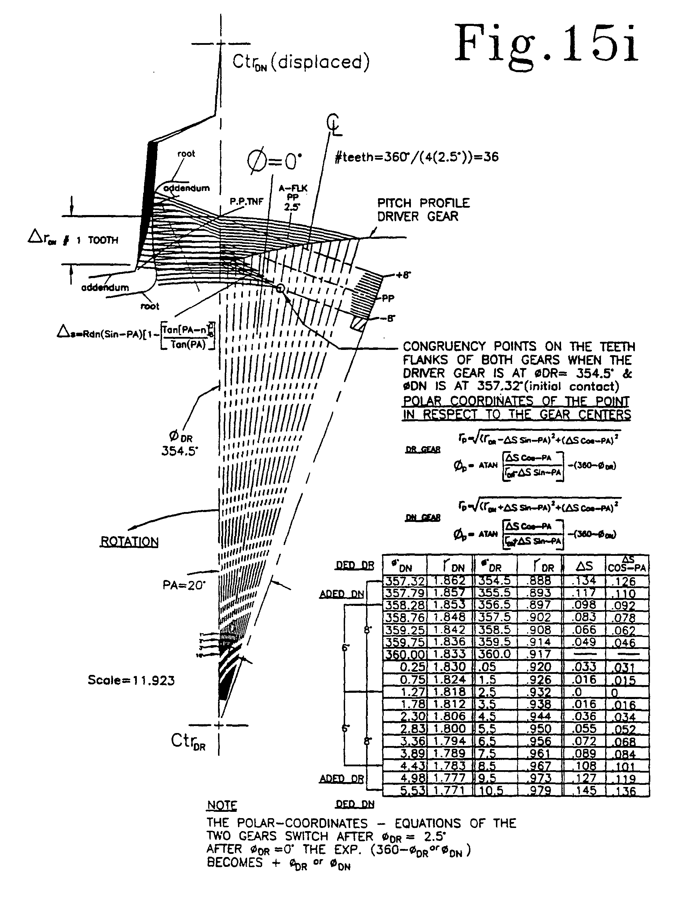

Fig. 15 depicts the conventional method for generating involute gear teeth on circular gears. First, a pitch circle pc is defined for each gear corresponding to the gear ratio of the gear pair. Then, a pressure angle is then selected, and a generating circle gc is constructed for each non-circular gear such that the line of action passes through the pitch point a of the pitch circles and is tangential to each pitch circle gc. Since the line of action represents a line of congruency, all points on the tooth flank must lie on the line of action as the tooth rotates towards the pitch point. Therefore, to determine the starting point on the tooth flank, a line m is drawn tangential to the line of action and passing through the pitch point. This line m is then rotated about a line n tangential to the line m and passing through the respective centre of each gear until the pitch point intersects the corresponding pitch circle. This point of intersection is denoted as a'.

The point of intersection of the line m with the generating circle is denoted as 1. As shown in Drawing 1 of Fig. 15, angle θ denotes the angular displacement of the point a' relative to the pitch point a. The point 1 is then rotated about the respective gear centre towards the pitch point over the angle θ. The resulting point represents the starting point for the tooth flank, and is denoted in Diagram as 1" for gear 3 and 1' for gear 4. This process is then repeated for each point on the line of action between the starting points 1 for each gear, with the resulting locus defining the shape for each tooth flank. Example loci are denoted in Diagram 1 as x and y. However, this process is unsuitable for non-circular gear pairs since the pitch point a moves along the line between the gear centres as the gears rotate.

The following method has been developed for defining tooth flanks for non-circular gears while ensuring that the gears have a constant contact ratio. Although the following method is directed to non-circular gears when used in conjunction with infinitely-variable transmissions, it should be understood that the method is applicable to any set of gears in which a constant contact ratio is desired.

First, the pitch locus for the gears must be defined in accordance with the desired velocity ratio profile. Fig. 15a depicts the velocity ratio profile R for first non-circular gear pair 3, 4 (shown in Fig. 15b for convenience). As will be apparent, the average velocity ratio of the gear pair 3, 4 is 1.0 since the non-circular gear 3 has the same size as the non-circular gear 4. However, the following discussion is also relevant to producing gears of unequal size.

From the velocity ratio profile shown in Fig. 15a, it is possible to obtain the polar coordinates for each point on the pitch locus for the driving gear 3. For instance, when the driving gear 3 has rotated 110°, the velocity ratio R is 1.0. Consequently, this point on the driving gear 3 will lie 50% of the distance between the centre of the driving gear 3 and the centre of the driven gear 4 and, therefore, will have as its polar coordinates 0.5∠110°.

Also, from this profile, it is possible to obtain the polar coordinates for each point on the pitch locus for the driven gear 4 by determining the area under the velocity ratio profile. For instance, the point on the driven gear 4 which will provide a velocity ratio R of 1.0 must also have a radius of 0.5 relative to the distance between the centre of the driving gear 3 and the centre of the driven gear 4. Since the velocity ratio of this point will start at 0.5 (at 0°) and increase linearly to 1.0 (at 110°), this point will have an average velocity ratio of 0.75 over 110°. Consequently, the angular displacement of this point will be 82.5° (75% of 110°), and its polar coordinates will be 0.5∠82.5°. The polar coordinates for the non-linear portion of the velocity ratio profile can be determined by integrating the equation for the velocity ratio profile over the angular interval of the non-linear portion. Fig. 15c depicts the polar coordinates for each point on the pitch locus for the non-circular gears 3, 4.

Fig. 15d depicts the velocity ratio profile R for a second non-circular gear pair 12, 11 (shown in Fig. 15e for convenience). As will be apparent, the second non-circular gears 12, 11 provide less acceleration than the first non-circular gears 3,4. Fig. 15f depicts the polar coordinates for each point on the pitch locus for the non-circular gears 12, 11.

Fig. 15g depicts a variation of the velocity ratio profile R, shown in Fig. 15a, 15d, characterized by an upward irregularity in the rotation of a driven variable ratio gear near the end of a period of constant acceleration, or by a downward irregularity in the rotation of a driven variable ratio gear near the beginning of a period of constant acceleration, and/or vice versa. These irregularities are denoted by +a and -a in Fig. 15g. This variation provides a slight slackening off in torque during a coupling phase in a torque continuum, thereby facilitating uncoupling of an active programmable coupling and, therefore, transfer of torque between angularly-adjacent variable velocity-ratio gear sets.

After the pitch locus for each non-circular gear has been defined, preferably the pitch locus is divided into equal angular segments corresponding to the number of teeth desired so that constant contact ratio is obtained. The pitch locus shown in Fig. 15h has been divided into 12° segments to provide 30 teeth on each non-circular gear. Then, a segment of the pitch locus is selected, and points are plotted along one half of the segment beginning with the point on the pitch locus which intersects the line joining the gear centres. In Diagram 1 of Fig. 15h, these locus points are denoted as a. b, c, d, e, f, g. Each locus point a thru g is then projected back to the line joining the centres of the gears, thereby defining the effective pitch point for each pitch locus point . The effective pitch points are denoted as pb, pc, pd, pe, pf, pg in Diagram 1.

Once the effective pitch points are defined for the pitch locus points, an effective line of action is created for each locus point, passing through the effective pitch point. Since all the locus points are designed to lie on the actual line of action of the gears, the effective lines of action are drawn parallel to each other and inclined with the same angle as the actual line of action. In Diagram 1 of Fig. 15h, the line of action is 25°, as in the case of the circular gear set of Fig. 15. Then, each pitch locus point is projected back along the respective effective line of action to locate an effective generating circle point. The distance between the effective generating circle point to the respective effective pitch point is equal to the arc length between the respective pitch locus point and the line joining the gear centres. The effective generating circle points are denoted as ab, ac, ad, ae, af, ag in Diagram 1.

Finally, the shape of the tooth flank is defined by rotating each generating circle point over an angular interval θ equal to the angular interval between the respective pitch locus point and the line joining the gear centres. By rotating each generating circle point about the centre of each gear, the addendum of the tooth flank of one gear and the dedendum of the tooth flank of the opposite gear will be created. The process is then repeated for the locus points on the other half of the pitch locus segment. This method ensures that the tooth flank of one gear remains congruent with the tooth flank of the meshing gear over an angular span which is twice the angular interval between similar tooth flanks. Therefore, a contact ratio of at least 2.0 is attained. Alternately, as shown in Fig. 15i, the process may be conducted for the entire tooth flank in a single step by projecting each pitch locus point along the respective effective line of action a distance equal to half the arc length between the respective pitch locus point and the line joining the gear centres, and then rotating the effective generating circle points back by angular interval θ/2.

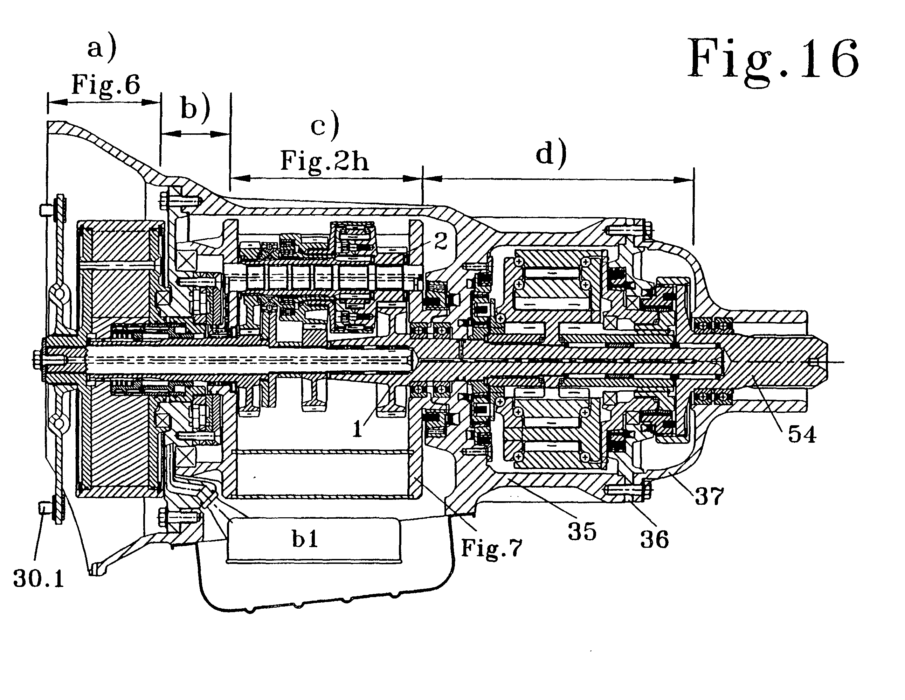

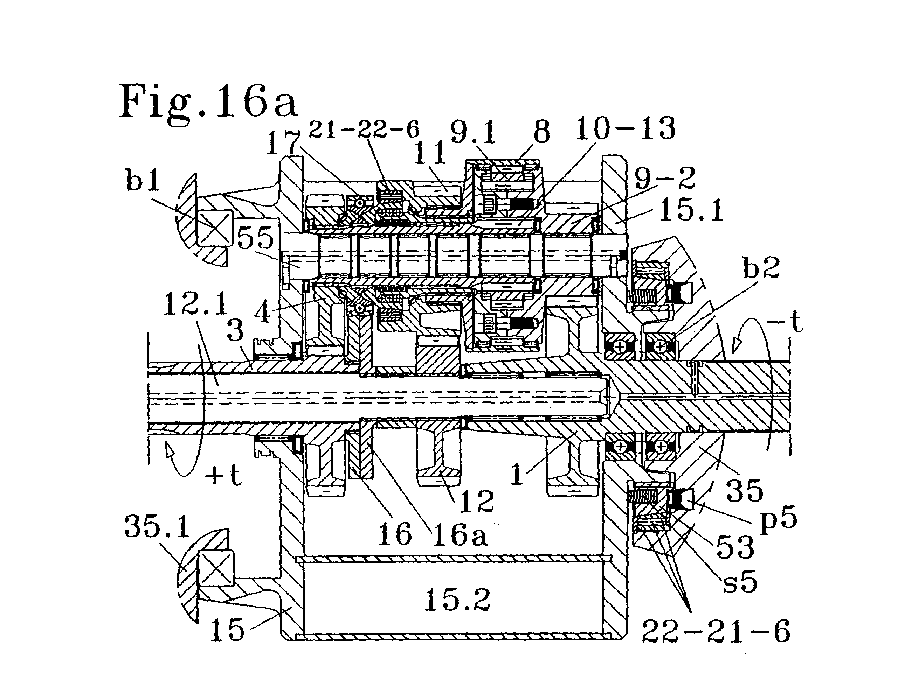

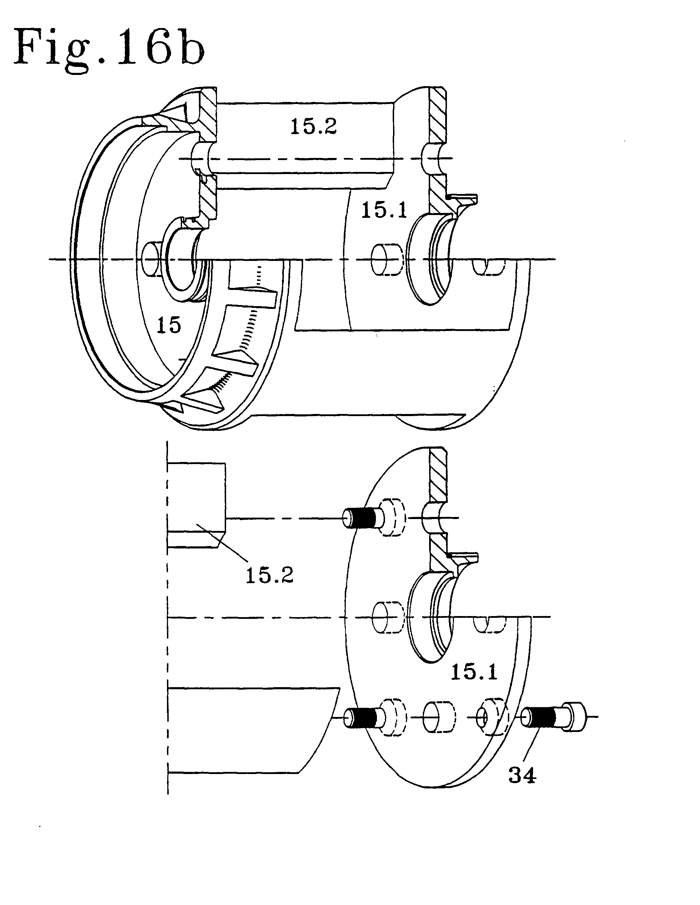

Having described several embodiments of the invention, a number of preferred transmission implementations incorporating these embodiments will now be briefly described. Fig. 16 depicts a transmission which incorporates the hydraulically-controlled variator described with reference to Fig. 11, 11a, 11b; the infinitely-variable "bevel-carrier" transmission 500; and Hi-Lo-Reverse gear box coupled to the output of the transmission 500.

Fig. 16a depicts a transmission which is substantially similar to the transmission shown in Fig. 16, but including a spool release clutch assembly 35 which allows the casing 15 to rotate in unison with the input and output shafts when the velocity ratio of the transmission 500 reaches unity. The casing 15 is shown in more detail in Fig. 16b. This modification to the transmission shown in Fig. 16 is advantageous since the gears of the transmission 500 will function as a solid coupling when the velocity ratio reaches unity. Therefore, by coupling the casing 15 to the input and output shaft at unity velocity ratio reduces power loss at high speeds by effectively removing the transmission 500 from the torque continuum.

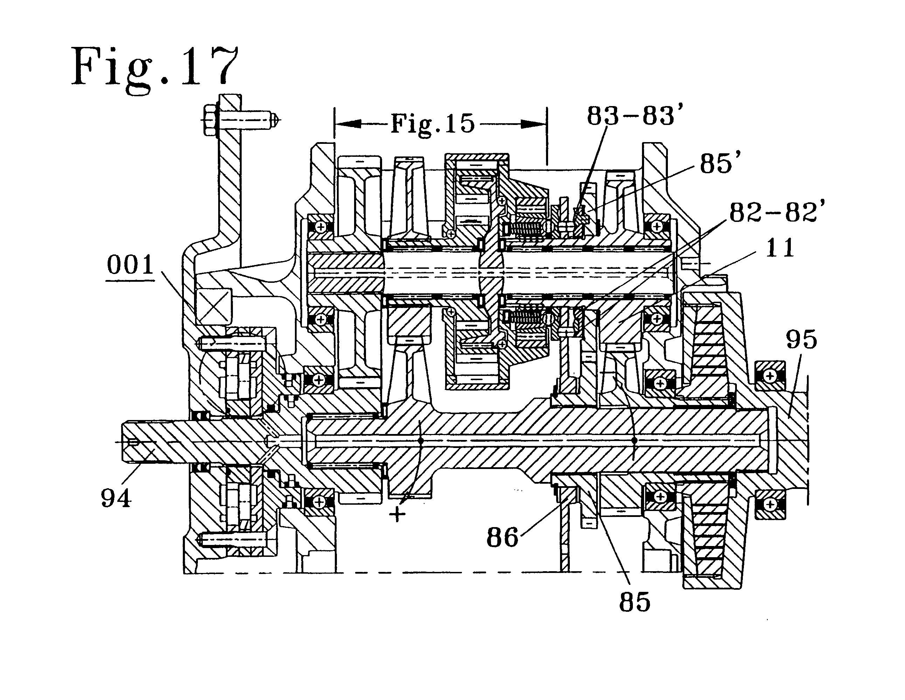

Fig. 17 depicts a transmission which incorporates an infinitely-variable transmission which amalgamates the features described with reference to Figs. 9 and 10; the phase-angle variation described with reference to Fig. 12; and a 2:1 gear box coupled to the output of the infinitely-variable transmission so as to obtain gear ratios extending in infinitely-small increments from 1:1 to 4:1.

The foregoing embodiments are intended to be illustrative of the preferred embodiments of the invention. Those of ordinary skill may envisage certain additions, deletions or modifications to the foregoing embodiments which, although not specifically suggested herein, will not depart from the scope of the invention as defined by the appended claims.

## Claims

1. An infinitely-variable transmission comprising:
a rotational input member (3.1; 12.1), and a rotational output member (1.1);
a pair of variable velocity-ratio gear sets (3,4; 11,12);
a multi-directional coupling (20,21,22) associated with one of the gear sets (3,4; 11,12);
an actuator (16,16a,17) associated with the coupling for coupling the gear sets (3,4; 11,12) to the rotational members (3.1; 12.1; 12.1) for providing a uniform velocity ratio between the rotational members (3.1; 12.1; 12.1);
a phase angle variator (25-27; 92,93; 96-99; 801-809) associated with at least one of the gear sets (3,4; 11,12) for varying a rotational angular displacement between the gear sets (3,4; 11,12) for varying the uniform velocity ratio.
**characterized in that** the actuator (15,16,17) is associated with the coupling for coupling the gear sets (3,4; 11,12) to the rotational members (3.1; 12.1; 12.1) over a common angular period for providing a uniform velocity ratio between the rotational members (3.1; 12.1; 12.1) over the angular period.

2. The transmission according to claim 1, **characterized in that** at least one of the gear sets (3,4; 11,12) has a constant contact ratio.

3. The transmission according to claim 1, **characterized in that** the actuator comprises a pair of shadow cams (15,16) coupled to one of the rotational members (3.1; 12.1; 12.1), each of the shadow cams (15,16) being synchronized with a respective one of the gear sets (3,4; 11,12) for altering a coupling state of the coupling (20,21,22).

4. The transmission according to claim 3, **characterized in that** at least one of the shadow cams (15, 16) includes a lobe for coupling the respective gear set (3,4; 11,12) to the rotational members (3.1; 12.1; 12.1) within the angular period.

5. The transmission according to claim 3, **characterized in that** the shadow cams (15,16) comprise a pair of bearing races (20), and a bearing (21,22) communicating with the races, each said bearing race including a race portion for coupling the respective gear set to the rotational members within the angular period.

6. The transmission according to claim 3, **characterized in that** the shadow cams (15,16) comprise a pair of bearing half-races (82,83), the half-races together comprising a common race, and a bearing disposed within the common race, each said bearing half-race including a race portion for coupling the respective gear set (3,4; 11,12) to the rotational members within the angular period.

7. The transmisssion according to claim 3, **characterized in that** the shadows cams (15,16) comprise a pair of actuator gears coupled to one of the rotational members, each said actuator gear including a riser portion (83) for coupling the respective gear set (3,4; 11,12) to the rotational members within the angular period.

8. The transmission according to claim 1, **characterized in that** each said variable-ratio gear set (3,4; 11,12) provides an interval of uniform acceleration and an interval of non-uniform acceleration, and the angular period comprises an angular interval of the uniform acceleration common to both of the gear sets.

9. The transmission according to claim 1, **characterized in that** each said variable-ratio gear set (3,4; 11,12) comprises a pair of meshing non-circular gears (3,4; 11,12), each said non-circular gear including a linear pitch circle portion and a non-linear pitch circle portion, and the angular period coincides with an interval of the linear pitch circle portions common to both of the gear sets.

10. The transmission according to claim 1, **characterized in that** the phase angle variator (25-27; 92,93; 96-99; 801-809) comprises a stator (25) coupled to one of rotational members (3.1; 12.1; 12.1), and a rotor (26) provided within the stator and being coupled to the other of the rotational members (3.1; 12.1; 12.1).

11. The transmission according to claim 10, **characterized in that** the stator (25) includes an aperture (p1) for receiving pressurized fluid for displacing the rotor (26) axially within the stator, and a plurality of spiral passages, and the rotor includes pressurized fluid ingress and egress ports (+,-) for communication with the spiral passages for rotating the rotor as the rotor is axially displaced.

12. The transmission according to claim 1, **characterized in that** the phase angle variator comprises a spring (92) coupled between the rotational members (3.1, 12.1) for varying the angular displacement in response to output load,

13. The transmission according to claim 1, **characterized in that** the phase angle variator comprises a differential including a first bevel gear (97) coupled to one of the rotational members, a manually-operated second bevel gear (96) coupled to the other of the rotational members (3.1), and a pinion (98) coupled to the bevel gears (96,97).

14. The transmission according to claim 1, **characterized in that** the phase angle variator comprises a first actuator gear (a;b) coupled to one of the rotational members (3.1; 12.1), a second actuator gear (b;a) coupled to the other of the rotational members (12.1; 3.1), a cage (807) rotatable about the actuator gears (a,b) and including a spool (808) rotatably coupled to the cage (807), the spool (808) retaining a first spool gear (809) thereon meshing with the first actuator gear (a;b), a second spool gear (809) thereon meshing with the second actuator gear, the first spool gear (809) being coupled to the second spool gear (809) for rotation therewith and having a diameter different from that of the second spool gear, and a brake (801-803) for selectively preventing rotation of the cage.

15. The transmisson according to claim 14, **characterized in that** the phase angle variator further comprises a clutch (806) coupled to the cage (807) for selectively preventing rotation of the cage relative to the rotational members (12.1).

16. The transmission according to claim 1, **characterized in that** the multi-directional coupling comprises:
a race (20) including a first tubular friction surface,
a tubular member (22) including a first bearing surface,
a tubular slipper (21) including a second tubular friction surface for coupling to the first tubular friction surface, and a second bearing surface opposite the second friction surface, the second bearing surface being coaxial to the first bearing surface and, together with the first bearing surface, defining a channel disposed therebetween, and
a plurality of roller elements (6) disposed in the channel in abutment against the bearing surfaces, the channel including a pocket retaining at least one of the roller elements (6) therein for coupling the race (20) to the tubular member (22) as the tubular member and the slipper rotate relative to one another;
and the actuator (15,16,17) is configured to prevent rotational movement of the slipper (21) relative to the tubular member (22) over the angular period.

17. The transmissioon according to claim 16, **characterized in that** the first friction surface comprises a conical friction surface, the second tubular friction surface being shaped to mate with the conical friction surface, and the actuator includes an actuator ring (17) for moving the slipper (21) axially relative to the race (20) for altering a coupling state of the coupling.

18. The transmission according to claim 16, **characterized in that** the first friction surface comprises a conical friction surface, the second tubular friction surface being shaped to mate with the conical friction surface, and the actuator includes an actuator ring (17) for moving the race (20) axially relative to the slipper (21) for altering a coupling state of the coupling.

19. The transmission according to claim 1, **characterized in that** the variable velocity-ratio gear sets (3,4; 11,12) are coupled to one of rotational members (1.1; 3.1; 12.1), and the transmission includes a torque-splitter (8,9,10) coupled to the other of the rotational members (1.1; 3.1; 12.1) for conveying torque between the gear sets and the other rotational member.

20. The transmission according to claim 19, **characterized in that** the torque-splitter (8,9,10) comprises a differential, the differential including a pair of bevel gears (8,10), a cage (9), and a pinion (9.1) rotatably coupled to the cage and meshing with the bevel gears.

21. The transmission according to claim 20, **characterized in that** the cage (9) is coupled to one of the variable-ratio gear sets (3,4; 11,12), a first of the bevel gears (8;9) is coupled to the other of the variable-ratio gear sets (11,12; 3,4), and a second of the bevel gears (10) is coupled to the one rotational members (1.1; 3.1; 12.1).

22. The transmission according to claim 20, **characterized in that** a first of the bevel gears (8;10) is coupled to one of the the variable-ratio gear sets(3,4; 11,12), a second of the bevel gears (10;8) is coupled to the other of the variable-ratio gear sets (11,12; 3,4), and the cage (9) is coupled to the one rotational member (1.1; 3.1; 12.1).

23. The transmission according to claim 19, **characterized in that** the torque splitter comprises a planetary gear (77) assembly.

24. The transmission according to claim 19, **characterized in that** the torque splitter comprises a coplanar reverted gear-train loop (77), the coplanar reverted gear-train loop including a pinion, an annular internal gear disposed around the pinion and being coaxial thereto, and a cage assembly comprising a ring gear including an inner surface engaging the pinion and an outer surface engaging the annular gear, the cage assembly further comprising an eccentric guide for dispoing the ring gear coplanar to and eccentrically with respect to the pinion and the annular gear.

25. An infinitely-variable transmission comprising:
a rotational input member (3.1);
a rotational output member (1.1);
a pair of non-circular driving gears (3,4; 11,12) coupled to one of the rotational members (1.1; 3.1); and
a plurality of variable velocity-ratio gear assemblies (3,4; 11,12; 3a,4a; 11a,12a; 3b,4b; 11b,12b;
3c,4c; 11c,12c) disposed about the one rotational member, and being coupled to the non-circular gears and each said variable velocity-ratio gear assembly comprising:
a multi-directional coupling (20,21,22) associated with one of the variable-ratio gear pairs (3,4, 11,12);
an actuator (15,16,17) associated with the coupling (20,21,22) for coupling the variable-ratio gear pairs pairs (3,4, 11,12) to the rotational members (3.1, 1.1),: and
a phase angle variator (25-27; 92,93; 96-99; 801-809) associated with the variable-ratio gear pairs (3,4, 11,12) for varying a rotational angular displacement between the first gear pairs and the second gear pairs for varying the uniform velocity ratio.
**characterized in that**
the coupling (20,21,22) couples the variable-ratio gear pairs (3,4,11,12) to the rotational members (3.1, 1.1) for providing a uniform velocity ration between the rotational members over an angular period, the angular periods for the variable velocity-ratio gear assemblies together comprising the rotational period; and **in that**
the other of the rotational members further comprises an intermediate shaft (13) including a pair of non-circular driven gears (4,11) meshing with the non-circular driving gears (3,12), one of the driving gears (3; 12) and the associated driven gear (4; 11) comprising a first variable-ratio gear pair, and the other of the driving gears and the associated driven gear comprising a second variable-ratio gear pair; providing the uniform velocity ratio between the rotational members over the angular period.

26. The infinitely-variable transmission according to claim 1 **characterized in that** the multi-directional coupling comprises:
a race (20) including a first tubular friction surface,
a tubular member (22) including a first bearing surface,
a tubular slipper (21) including a second tubular friction for coupling to the first tubular friction surface, and
a second bearing surface opposite the second friction surface, the second bearing surface being coaxial to the first bearing surface and, together withe the first bearing surface, defining a channel disposed therebetween, and
a plurality of roller elements (6) disposed in the channel in abutment against the bearing surfaces, the channel including a pocket retaining at least one of the roller elements (6) therein for coupling the race (20) to the tubular member (22) as the tubular member (22) and the slipper (21) rotate relative to one another.

27. The infinitely-variable transmission according to claim 26, **characterized in that** the first friction surface comprises a conical friction surface, the second tubular friction surface being shaped to mate with the conical friction surface, and the cam comprises a shadow cam (15,16) including a lobe for pressing the race (20) against the slipper (21) over the angular portion.

28. The infinitely-variable transmission according to claim 26, **characterized in that** the first friction surface comprises a conical friction surface, the second tubular friction surface being shaped to mate with the conical friction surface, and the cam comprises a bearing race, and a bearing in communicating with the bearing race, the bearing race including a race portion (20) for pressing the coupling race against the slipper (21) over the anguluar portion.

29. The infinitely-variable transmission according to claim 26, **characterized in that** the first friction surface comprises a conical friction surface, the second tubular friction surface being shaped to mate with the conical friction surface, and the cam (84,85) comprises a gear including an axially-extending riser portion (83) for pressing the race (20) against the slipper (21) over the angular portion.

## Patentansprüche

1. Stufenloses Getriebe mit:
einem Drehantriebsglied (3.1; 12.1) und einem Drehabtriebsglied (1.1);
einem Paar veränderlicher Übersetzungszahnradsätze (3,4; 11,12);
einer multidirektionalen Kupplung (20,21,22), verbunden mit einem der Zahnradsätze (3,4; 11,12);
einem Stellantrieb (16,16a,17), verbunden mit der Kupplung für das Kuppeln der Zahnradsätze (3,4; 11,12) an die Drehglieder (3.1; 12.1; 12.1) zum Versehen eines gleichmäßigen Übersetzungsverhältnisses zwischen den Drehgliedern;
einem Phasenwinkelvariator (25-27; 92,93; 96-99; 801-809), verbunden mit mindestens einem der Zahnradsätze (3,4; 11,12) für das Ändern einer Drehwinkelverschiebung zwischen den Zahnradsätzen (3,4; 11,12) für das Ändern des gleichmäßigen Übersetzungsverhältnisses,
**dadurch gekennzeichnet, dass** der Stellantrieb (15,16,17) mit der Kupplung verbunden ist, um die Zahnradsätze (3,4; 11,12) über eine gemeinsame Winkelperiode an die Drehglieder (3.1; 12.1; 12.1) zu kuppeln, um ein gleichmäßiges Übersetzungsverhältnis zwischen den Drehgliedern (3.1; 12.1; 12.1) über die Winkelperiode bereit zu stellen.

2. Getriebe nach Anspruch 1, **dadurch gekennzeichnet, dass** mindestens einer der Zahnradsätze (3,4; 11,12) einen konstanten Überdeckungsgrad hat.

3. Getriebe nach Anspruch 1, **dadurch gekennzeichnet, dass** der Stellantrieb ein Paar Schattennocken (15,16), an eines der Drehglieder (3.1; 12.1; 12.1) gekuppelt, umfasst, wobei jeder der Schattennocken (15,16) mit einem jeweiligen Zahnradsatz (3,4; 11,12) synchronisiert ist, um einen Kupplungszustand der Kupplung (20,21,22) zu ändern.

4. Getriebe nach Anspruch 3, **dadurch gekennzeichnet, dass** mindestens einer der Schattennocken (15,16) einen Nocken enthält, um den jeweiligen Zahnradsatz (3,4; 11,12) innerhalb der Winkelperiode an die Drehglieder (3.1; 12.1; 12.1) zu kuppeln.

5. Getriebe nach Anspruch 3, **dadurch gekennzeichnet, dass** die Schattennocken (15,16) ein Paar Lagerlaufringe (20) und ein Lager (21,22), das mit den Laufringen in Verbindung steht, umfassen, wobei jeder Lagerlaufring einen Laufringteil enthält, um den jeweiligen Zahnradsatz innerhalb der Winkelperiode an die Drehglieder zu kuppeln.

6. Getriebe nach Anspruch 3, **dadurch gekennzeichnet, dass** die Schattennocken (15,16) ein Paar Lagerhälftenlaufringe (82,83) umfassen, wobei die Hälftenlaufringe zusammen einen gemeinsamen Laufring umfassen, und ein innerhalb des gemeinsamen Laufringes befindliches Lager, wobei jeder Lagerhälftenlaufring einen Laufringteil enthält, um den jeweiligen Zahnradsatz (3,4; 11,12) innerhalb der Winkelperiode an die Drehglieder zu kuppeln.

7. Getriebe nach Anspruch 3, **dadurch gekennzeichnet, dass** die Schattennocken (15,16) ein Paar Stellantriebszahnräder, an eines der Drehglieder gekuppelt, umfassen, wobei jedes Stellantriebszahnrad einen Steigerteil (83) enthält, um den jeweiligen Zahnradsatz (3,4; 11,12) innerhalb der Winkelperiode an die Drehglieder zu kuppeln.

8. Getriebe nach Anspruch 1, **dadurch gekennzeichnet, dass** jeder der Übersetzungszahnradsätze (3,4; 11,12) ein Intervall gleichmäßiger Beschleunigung und ein Intervall ungleichmäßiger Beschleunigung bereit stellt und dass die Winkelperiode ein Winkelintervall der beiden Zahnradsätzen gemeinsamen gleichmäßigen Beschleunigung enthält.

9. Getriebe nach Anspruch 1, **dadurch gekennzeichnet, dass** jeder der Übersetzungszahnradsätze (3,4; 11,12) ein Paar ineinandergreifender unrunder Zahnräder (3,4; 11,12) umfasst, wobei jedes der unrunden Zahnräder einen linearen Teilkreisteil und einen nichtlinearen Teilkreisteil umfasst und wobei die Winkelperiode mit einem Intervall der beiden Zahnradsätzen gemeinsamen linearen Teilkreisteile übereinstimmt.

10. Getriebe nach Anspruch 1, **dadurch gekennzeichnet, dass** der Phasenwinkelvariator (25-27; 92,93; 96-99; 801-809) einen Stator (25), an eines der Drehglieder (3.1; 12.1; 12.1) gekuppelt, und einen Rotor (26) umfasst, der innerhalb des Stators angeordnet und an die jeweils anderen Drehglieder (3.1; 12.1; 12.1) gekuppelt ist.

11. Getriebe nach Anspruch 10, **dadurch gekennzeichnet, dass** der Stator (25) eine Öffnung (p1) enthält, um unter Druck stehendes Fluid für das Verschieben des Rotors (26) innerhalb des Stators in axialer Richtung zu empfangen, sowie eine Vielzahl von Spiralkanälen, und dass der Rotor Eintritts- und Austrittsöffnungen für unter Druck stehendes Fluid (+,-) für die Verbindung mit den Spiralkanälen für das Drehen des Rotors, wenn der Rotor in axialer Richtung verschoben wird, umfasst.

12. Getriebe nach Anspruch 1, **dadurch gekennzeichnet, dass** der Phasenwinkelvariator eine Feder (92), zwischen den Drehgliedem (3.1, 12.1) gekuppelt, umfasst, um die Phasenverschiebung als Reaktion auf die Ausgangslast zu verändern.

13. Getriebe nach Anspruch 1, **dadurch gekennzeichnet, dass** der Phasenwinkelvariator ein Differentialgetriebe mit einem ersten Kegelrad (97), an eines der Drehglieder gekuppelt, ein manuell bedientes zweites Kegelrad (96), an die anderen Drehglieder (3.1) gekuppelt, und ein an die Kegelräder (96,97) gekuppeltes Ritzel umfasst.

14. Getriebe nach Anspruch 1, **dadurch gekennzeichnet, dass** der Phasenwinkelvariator ein erstes Stellantriebszahnrad (a;b), an eines der Drehglieder (3.1; 12.1) gekuppelt; ein zweites Stellantriebszahnrad (b;a), an die anderen Drehglieder (12.1; 3.1) gekuppelt; einen Käfig (807), drehbar um die Stellantriebszahnräder (a,b) und enthaltend eine Spule (808), drehbar an den Käfig (807) gekuppelt, umfasst; wobei die Spule (808) nimmt auf ein erstes Spulenrad (809) darauf eingreifend in das erste Stellantriebszahnrad (a;b) ein zweites Spulenrad (809) darauf eingreifend in ein zweites Stellantriebszahnrad sichert, wobei das erste Spulenrad (809) an das zweite Spulenrad (809) für Drehung mit demselben gekuppelt ist und einen anderen Durchmesser als das zweite Spulenrad hat sowie eine Bremse (81-803) für selektives Verhindern von Drehung des Käfigs.

15. Getriebe nach Anspruch 14, **dadurch gekennzeichnet, dass** der Phasenwinkelvariator weiterhin eine Kupplung (806), für selektives Verhindern von Drehung des Käfigs retativ zu den Drehgliedern (12.1) an den Käfig (807) gekuppelt, umfasst.

16. Getriebe nach Anspruch 1, **dadurch gekennzeichnet, dass** die multidirektionale Kupplung umfasst:
einen Laufring (20) mit einer ersten rohrförmigen Reibungsfläche,
ein röhrenförmiges Teil (22) mit einer ersten Lagerfläche,
ein röhrenförmiges Gleitstück (21) mit einer zweiten röhrenförmigen Reibungsfläche für Kuppeln an die erste röhrenförmige Reibungsfläche und mit einer zweiten Lagerfläche gegenüber der zweiten Reibungsfläche, wobei die zweite Lagerfläche gleichachsig mit der ersten Lagerfläche ist und zusammen mit der ersten Lagerfläche einen zwischen diesen befindlichen Kanal definiert,
eine Vielzahl von Wälzkörpern (6), angeordnet in dem Kanal anstoßend an die Laufflächen, wobei der Kanal einen Hohlraum, darin sichernd zumindest einen der Wälzkörper (6) für Kuppeln des Laufringes (20) an das röhrenförmige Teil (22), wenn sich das röhrenförmige Teil und das Gleitstück relativ zueinander drehen, enthält; und
wobei der Stellantrieb (15,16,17) so ausgelegt ist, dass er Drehbewegung des Gleitstückes (21) relativ zu dem röhrenförmigen Teil (22) über die Winkelperiode verhindert.

17. Getriebe nach Anspruch 16, **dadurch gekennzeichnet, dass** die erste Reibungsfläche eine konische Reibungsfläche umfasst, wobei die zweite röhrenförmige Reibungsfläche so geformt ist, dass sie zu der konischen Reibungsfläche passt, und dass der Stellantrieb einen Stellantriebring (17) für Bewegen des Gleitstückes (21) axial relativ zu dem Laufring (20) für Ändern eines Kupplungszustandes der Kupplung beinhaltet.

18. Getriebe nach Anspruch 16, **dadurch gekennzeichnet, dass** die erste Reibungsfläche eine konische Reibungsfläche umfasst, wobei die zweite röhrenförmige Reibungsfläche so geformt ist, dass sie zu der konischen Reibungsfläche passt, und dass der Stellantrieb einen Stellantriebring (17) für Bewegen des Laufringes (20) axial relativ zu dem auf das Gleitstück (21) für Ändern eines Kupplungszustandes der zu dem auf das Gleitstück (21) für Ändern eines Kupplungszustandes der Kupplung beinhaltet.

19. Getriebe nach Anspruch 1, **dadurch gekennzeichnet, dass** die veränderlichen Übersetzungszahnradsätze (3,4; 11,12) an eines der Drehglieder (1.1; 3.1; 12.1) gekuppelt sind und dass das Getriebe einen Drehmomentverteiler (8,9,10), an die anderen Drehglieder (1.1; 3.1; 12.1) gekuppelt für Übertragen von Drehmoment zwischen den Zahnradsätzen und dem anderen Drehglied, beinhaltet.

20. Getriebe nach Anspruch 19, **dadurch gekennzeichnet, dass** der Drehmomentverteiler (8,9,10) ein Differentialgetriebe umfasst, wobei das Differentialgetriebe ein Paar Kegelräder (8,10), einen Käfig (9) und ein Ritzel (9.1), drehbar an den Käfig gekuppelt und eingreifend in die Kegelräder, beinhaltet.

21. Getriebe nach Anspruch 20, **dadurch gekennzeichnet, dass** der Käfig (9) an eines der Übersetzungszahnrädersätze (3,4; 11,12) gekuppelt ist, wobei ein erstes der Kegelräder (8,9) an die anderen Übersetzungszahnrädersätze (11,12; 3,4) gekuppelt ist und wobei ein zweites der Kegelräder (10) an das eine der Drehglieder (1.1; 3.1; 12.1) gekuppelt ist.

22. Getriebe nach Anspruch 20, **dadurch gekennzeichnet, dass** ein erstes der Kegelräder (8;10) an eines der Übersetzungszahnradsätze (3,4; 11,12) gekuppelt ist, wobei ein zweites der Kegelräder (10;8) an die anderen Übersetzungszahnradsätze (3,4; 11,12) gekuppelt ist, und wobei der Käfig (9) an das eine Drehglied (1.1; 3.1; 12.1) gekuppelt ist.

23. Getriebe nach Anspruch 19, **dadurch gekennzeichnet, dass** der Drehmomentverteiler eine Planetengetriebebaugruppe (77) umfasst.

24. Getriebe nach Anspruch 19, **dadurch gekennzeichnet, dass** der Drehmomentverteiler ein koplanares Wendegetriebe (77) umfasst, wobei das koplanare Wendegetriebe ein Ritzel, ein ringförmiges Innenzahnrad, angeordnet um das Ritzel herum und gleichachsig dazu, und eine Käfigbaugruppe umfasst, die ein Ringrad mit einer Innenfläche eingreifend in das Ritzel und mit einer Außenfläche eingreifend in das Innenzahnrad umfasst, wobei die Käfigbaugruppe weiterhin eine exzentrische Führung für das Anordnen des Ringrades koplanar zu und exzentrisch in Bezug auf das Ritzel und das Innenzahnrad umfasst.

25. Stufenloses Getriebe, umfassend:
ein Drehantriebsglied (3.1);
ein Drehabtriebsglied (1.1);
ein Paar unrunder Antriebsräder (3,4; 11,12), gekuppelt an eines der Drehglieder (1.1; 3.1); und
eine Vielzahl von stufenlosen Getriebebaugruppen (3,4; 11,12; 3a,4a; 11a,12a; 3b,4b; 11b,12b; 3c,4c; 11c,12c), angeordnet um das eine Drehglied und gekuppelt an die unrunden Räder, wobei jede der stufenlosen Getriebebaugruppen umfasst:
eine multidirektionale Kupplung (20,21,22), verbunden mit einem der Übersetzungszahnradpaare (3,4, 11,12);
einen Stellantrieb (15,16,17), verbunden mit der Kupplung (20,21,22) für Kuppeln der Übersetzungszahnradpaare (3,4 11,12) an die Drehglieder (3.1, 1.1);
einen Phasenwinkelvariator (25-27; 92,93; 96-99; 801-809), verbunden mit den Übersetzungszahnradpaaren (3,4, 11,12) für Verändern einer Drehwinkelverschiebung zwischen den ersten Zahnradpaaren und den zweiten Zahnradpaaren für Verändern des gleichmäßigen Übersetzungsverhältnisses,
**dadurch gekennzeichnet, dass**
die Kupplung (20,21,22) die Übersetzungszahnradpaare (3,4,11,12) an die Drehglieder (3.1, 1.1) kuppelt, um gleichförmiges Übersetzungsverhältnis zwischen den Drehgliedern über eine Winkelperiode bereit zu stellen, wobei die Winkelperioden der stufenlosen Übersetzungsgetriebebaugruppe zusammen die Rotationsperiode umfassen;
und dass das andere der Drehglieder weiterhin eine Zwischenwelle (13) mit einem Paar unrunder Abtriebsräder (4,11) eingreifend in die unrunden Antriebsräder (3,12) umfasst, wobei eines der Antriebsräder (3,12) und das zugehörige Abtriebsrad (4; 11) ein erstes Übersetzungszahnradpaar umfasst und wobei das andere der Antriebsräder und das zugehörige Abtriebsrad ein zweites Übersetzungszahnradpaar umfasst; wodurch eine gleichmäßige Übersetzung zwischen den Drehgliedern über die Winkelperiode bereit gestellt wird.

26. Stufenloses Getriebe nach Anspruch 1, **dadurch gekennzeichnet, dass** die multidirektionale Kupplung umfasst:
einen Laufring (20) mit einer ersten rohrförmigen Reibungsfläche,
ein röhrenförmiges Teil (22) mit einer ersten Lagerfläche,
ein röhrenförmiges Gleitstück (21) mit einer zweiten Reibungsfläche für Kuppeln an die erste röhrenförmige Reibungsfläche;
eine zweite Lagerfläche gegenüber der zweiten Reibungsfläche, wobei die zweite Lagerfläche gleichachsig zu der ersten Lagerfläche angeordnet ist und zusammen mit der ersten Lagerfläche einen Kanal zwischen denselben definiert;
eine Vielzahl von Wälzkörpern (6), angeordnet in dem Kanal anstoßend an die Lagerflächen, wobei der Kanal einen Hohlraum enthält, der mindestens einen der Wälzkörper (6) darin sichert, für Kuppeln des Laufringes (20) an das röhrenförmige Teil (22), wenn sich das röhrenförmige Teil (22) und das Gleitstück (21) relativ zueinander drehen.

27. Stufenloses Getriebe nach Anspruch 26, **dadurch gekennzeichnet, dass** die erste Reibungsfläche eine konische Reibungsfläche umfasst, wobei die zweite röhrenförmige Reibungsfläche so geformt ist, dass sie zu der konischen Reibungsfläche passt, und wobei der Nocken einen Schattennocken (15,16) mit einem Nocken zum Andrücken des Laufringes (20) gegen das Gleitstück (21) über den Winkelteil umfasst.

28. Stufenloses Getriebe nach Anspruch 26, **dadurch gekennzeichnet, dass** die erste Reibungsfläche eine konische Reibungsfläche umfasst, wobei die zweite röhrenförmige Reibungsfläche so geformt ist, dass sie zu der konischen Reibungsfläche passt, und wobei der Nocken einen Lagerlaufring und ein Lager mit dem Lagerlaufring in Verbindung stehend umfasst, und wobei der Lagerlaufring einen Laufringteil (20) zum Andrücken des Kupplungslaufringes gegen das Gleitstück (21) über den Winkelteil beinhaltet.

29. Stufenloses Getriebe nach Anspruch 26, **dadurch gekennzeichnet, dass** die erste Reibungsfläche eine konische Reibungsfläche umfasst, wobei die zweite rohrförmige Reibungsfläche so geformt ist, dass sie zu der konischen Reibungsfläche passt, und wobei der Nocken (84,85) ein Zahnrad mit einem sich in axialer Richtung erstreckenden Steigerteil (83) zum Andrücken des Laufringes (20) gegen das Gleitstück (21) über den Winkelteil umfasst.

## Revendications

1. Transmission à rapport infiniment variable comprenant :
un organe rotatif d'entrée (3.1 ; 12.1) et un organe rotatif de sortie (1.1) ;
une paire d'engrenages à rapport de vitesse variable (3, 4 ; 11, 12) ;
un accouplement multidirectionnel (20, 21, 22) associé à l'un des engrenages (3, 4 ; 11, 12) ;
un actionneur (16, 16a, 17) associé à l'accouplement pour coupler les engrenages (3, 4 ; 11, 12) aux organes rotatifs (3.1 ; 12.1 ; 12.1) assurant un rapport de vitesse uniforme entre les organes rotatifs (3.1 ; 12.1 ; 12.1) ;
un variateur d'angle de phase (25-27 ; 92, 93 ; 96-99 ; 801-809) associé à au moins un des engrenages (3, 4 ; 11, 12) pour faire varier le déplacement angulaire rotatif entre les engrenages (3, 4 ; 11, 12) afin de faire varier le rapport de vitesse uniforme ;
**caractérisée en ce que** l'actionneur (15, 16, 17) est associé à l'accouplement couplant les engrenages (3, 4 ; 11, 12) aux organes rotatifs (3.1 ; 12.1 ; 12.1) sur une période angulaire commune pour assurer un rapport de vitesse uniforme entre les organes rotatifs (3.1 ; 12.1 ; 12.1) sur la période angulaire.

2. Transmission selon la revendication 1, **caractérisée en ce qu'**au moins un des engrenages (3, 4 ; 11, 12) a un rapport de contact constant.

3. Transmission selon la revendication 1, **caractérisée en ce que** l'actionneur comprend une paire de cames à évitement (15, 16) couplées à l'un des organes rotatifs (3.1 ; 12.1 ; 12.1), chacune des cames à évitement (15, 16) étant respectivement synchronisée avec l'un des engrenages (3, 4 ; 11, 12) pour modifier l'état de couplage de l'accouplement (20, 21, 22).

4. Transmission selon la revendication 3, **caractérisée en ce qu'**au moins une des cames à évitement (15, 16) comprend un lobe pour coupler l'engrenage respectif (3, 4 ; 11, 12) aux organes rotatifs (3.1 ; 12.1 ; 12.1) au cours de la période angulaire.

5. Transmission selon la revendication 3, **caractérisée en ce que** les cames à évitement (15, 16) comprennent une paire de pistes de roulement (20) et un roulement (21, 22) communiquant avec les pistes, chacune desdites pistes comportant une partie destinée à relier l'engrenage respectif aux organes rotatifs au cours de la période angulaire.

6. Transmission selon la revendication 3, **caractérisée en ce que** les cames à évitement (15, 16) comprennent une paire de demi-pistes de roulement (82, 83) formant ensemble une piste commune, et un roulement disposé dans la piste commune, chaque demi-piste comportant une partie destinée à coupler l'engrenage respectif (3, 4 ; 11, 12) aux organes rotatifs au cours de la période angulaire.

7. Transmission selon la revendication 3, **caractérisée en ce que** les cames à évitement (15, 16) comprennent une paire d'engrenages actionneurs couplés à l'un des organes rotatifs, chacun desdits actionneurs comportant une partie montante (83) destinée à coupler l'engrenage respectif (3, 4 ; 11, 12) aux organes rotatifs au cours de la période angulaire.

8. Transmission selon la revendication 1, **caractérisée en ce que** chacun desdits engrenages à rapport variable (3, 4 ; 11, 12) fournit un intervalle d'accélération uniforme et un intervalle d'accélération non uniforme, et que la période angulaire comprend un intervalle angulaire d'accélération uniforme commun aux deux engrenages.

9. Transmission selon la revendication 1, **caractérisée en ce que** chacun desdits engrenages à rapport variable (3, 4 ; 11, 12) comprend une paire de roues dentées non circulaires (3, 4 ; 11, 12) en prise mutuelle, chacune desdites roues dentées non circulaires comportant une portion de cercle à pas linéaire et une portion de cercle à pas non linéaire, et que la période angulaire coïncide avec un intervalle de la portion de cercle à pas linéaire commun aux deux engrenages.

10. Transmission selon la revendication 1, **caractérisée en ce que** le variateur d'angle de phase (25-27 ; 92, 93 ; 96-99 ; 801-809) comprend un stator (25) couplé à l'un des organes rotatifs (3.1; 12.1; 12.1) et un rotor (26) intérieur au stator et couplé à l'autre organe rotatif (3.1 ; 12.1; 12.1).

11. Transmission selon la revendication 10, **caractérisée en ce que** le stator (25) comporte une ouverture (p1) destinée à recevoir un fluide sous pression pour déplacer le rotor (26) axialement à l'intérieur du stator, et plusieurs passages hélicoïdaux, et que le rotor comporte des orifices d'entrée et de sortie du fluide (+, -) communiquant avec les passages hélicoïdaux pour faire tourner le rotor pendant son déplacement axial.

12. Transmission selon la revendication 1, **caractérisée en ce que** le variateur d'angle de phase comprend un ressort (92) couplé entre les organes rotatifs (3.1 ; 12.1) pour faire varier le déplacement angulaire en réaction à la charge en sortie.

13. Transmission selon la revendication 1, **caractérisée en ce que** le variateur d'angle de phase comprend un différentiel comprenant une première roue dentée conique (97) couplée à l'un des organes rotatifs, une deuxième roue dentée conique actionnée manuellement (96) couplée à l'autre organe rotatif (3.1), et un pignon (98) couplé aux roues dentées (96, 97).

14. Transmission selon la revendication 1, **caractérisée en ce que** le variateur d'angle de phase comprend une première roue dentée actionneur (a ; b) couplée à l'un des organes rotatifs (3.1 ; 12.1), une deuxième roue dentée actionneur (b ; a) couplée à l'autre organe rotatif (12.1 ; 3.1), une cage (807) pouvant tourner autour des actionneurs (a ; b) et comportant un tiroir (808) couplé en rotation avec la cage (807), le tiroir (808) retenant une première roue dentée de tiroir (809) en prise avec la première roue dentée actionneur (a ; b), une deuxième roue dentée de tiroir (809) sur celle-ci en prise avec la deuxième roue dentée actionneur, la première roue dentée de tiroir (809) étant couplée avec la deuxième roue dentée de tiroir (809) pour tourner avec elle, et ayant un diamètre différent de celui de la deuxième roue dentée de tiroir, et un frein (801-803) empêchant de façon sélective la rotation de la cage.

15. Transmission selon la revendication 14, **caractérisée en ce que** le variateur d'angle de phase comprend en outre un embrayage (806) couplé à la cage (807) empêchant de façon sélective la rotation de la cage par rapport à aux organes rotatifs (12.1)

16. Transmission selon la revendication 1, **caractérisée en ce que** l'accouplement multidirectionnel comprend :
une piste (20) comportant une première surface tubulaire de frottement ;
un organe tubulaire (22) comportant une première surface de roulement ;
un patin tubulaire (21) comportant une deuxième surface tubulaire de frottement pour l'accouplement à la première surface tubulaire de frottement, et une deuxième surface de roulement faisant face à la deuxième surface de frottement, la deuxième surface de roulement étant coaxiale avec la première surface de roulement, et définissant ensemble, avec la première surface de roulement, urne goulotte située entre elles; et
plusieurs éléments à rouleaux (6) disposés dans la goulotte, en butée contre les surfaces de roulement, la goulotte comportant une poche retenant dans celle-ci au moins un des éléments à rouleaux (6) pour coupler la piste (20) à l'organe tubulaire (22) lorsque l'organe tubulaire et le patin tournent l'un par rapport à l'autre ; et
l'actionneur (15, 16, 17) est configuré de façon à empêcher le mouvement en rotation du patin (21) par rapport à l'organe tubulaire (22) sur la période angulaire.

17. Transmission selon la revendication 16, **caractérisée en ce que** la première surface de frottement comprend une surface de frottement conique, la deuxième surface de frottement tubulaire ayant une forme s'adaptant à la surface conique, et que l'actionneur comporte une bague d'actionneur (17) destinée à déplacer le patin (21) axialement par rapport à la piste (20) de façon à modifier l'état de couplage de l'accouplement.

18. Transmission selon la revendication 16, **caractérisée en ce que** la première surface de frottement comprend une surface de frottement conique, la deuxième surface de frottement tubulaire ayant une forme s'adaptant à la surface conique, et que l'actionneur comporte une bague d'actionneur (17) destinée à déplacer la piste (20) axialement par rapport au patin (21) de façon à modifier l'état de couplage de l'accouplement.

19. Transmission selon la revendication 1, **caractérisée en ce que** les engrenages à rapport de vitesse variable (3, 4 ; 11, 12) sont couplés à l'un des organes rotatifs (1.1 ; 3.1 ; 12.1), et que la transmission comprend un répartiteur de couple (8, 9, 10) couplé à l'autre organe rotatif (1.1 ; 3.1 ; 12.1) pour transmettre le couple entre les engrenages et l'autre organe rotatif.

20. Transmission selon la revendication 19, **caractérisée en ce que** le répartiteur de couple (8, 9, 10) comprend un différentiel, le différentiel comprenant une paire de roues dentées coniques (8, 10), une cage (9) et un pignon (9.1) couplé en rotation à la cage et en prise avec les roues dentées.

21. Transmission selon la revendication 20, **caractérisée en ce que** la cage (9) est couplée à l'un des engrenages à rapport de vitesse variable (3, 4 ; 11, 12), que la première des roues dentées coniques (8, 9) est couplée à l'autre engrenage à rapport de vitesse variable (11, 12 ; 3, 4), et que la deuxième roue dentée conique (10) est couplée à l'un des organes rotatifs (1.1 ; 3.1 ; 12.1).

22. Transmission selon la revendication 20, **caractérisée en ce que** la première des roues dentées coniques (8, 10) est couplée à l'un des engrenages à rapport de vitesse variable (3, 4 ; 11, 12), que la deuxième roue dentée conique (10, 8) est couplée à l'autre engrenage à rapport de vitesse variable (11, 12 ; 3, 4), et que la cage (9) est couplée à l'un des organes rotatifs (1.1 ; 3.1 ; 12.1).

23. Transmission selon la revendication 19, **caractérisée en ce que** le répartiteur de couple comprend un train épicycloïdal (77).

24. Transmission selon la revendication 19, **caractérisée en ce que** le répartiteur de couple comprend une boucle de train d'engrenage inversée coplanaire (77) comprenant un pignon, une roue annulaire à denture intérieure disposée autour du pignon et coaxiale avec lui, et un ensemble de cage comprenant une couronne dentée comportant une surface intérieure engageant le pignon et une surface extérieure engageant la roue dentée annulaire, l'ensemble de cage comprenant en outre un guide excentrique destiné à disposer la couronne dans le même plan et excentriquement par rapport au pignon et à la roue dentée annulaire.

25. Transmission à rapport infiniment variable comprenant :
un organe d'entrée rotatif (3.1) ;
un organe de sortie rotatif (1.1) ;
une paire de roues dentées non circulaires (3, 4 ; 11, 12) couplées à l'un des organes rotatifs (1.1 ; 3.1) ; et
plusieurs engrenages à rapport de vitesse variable (3, 4 ; 11, 12 ; 3a, 4a ; 11a, 12a ; 3b, 4b ; 11b, 12b ; 3c, 4c ; 11c, 12c) disposés autour d'un des organes rotatifs et couplés aux roues dentées non circulaires, chacun desdits engrenages à rapport de vitesse variable comprenant :
un accouplement multidirectionnel (20, 21, 22) associé à l'une des paires d'engrenages à rapport de vitesse variable (3, 4 ; 11, 12) ;
un actionneur (15, 16, 17) associé à l'accouplement (20, 21, 22) pour coupler les paires d'engrenages à rapport de vitesse variable (3, 4 ; 11, 12) aux organes rotatifs (3.1 ; 1.1) ; et
un variateur d'angle de phase (25-27 ; 92, 93 ; 96-99 ; 801-809) associé aux paires d'engrenages à rapport variable (3, 4 ; 11, 12) pour faire varier le déplacement angulaire en rotation entre les première et deuxième paires d'engrenages afin de faire varier le rapport de vitesse uniforme.
**caractérisée en ce que**
l'accouplement (20, 21, 22) couple les paires d'engrenages à rapport variable (3, 4 ; 11, 12) aux organes rotatifs (3.1 ; 1.1) pour assurer un rapport de vitesse uniforme entre les organes rotatifs sur une période angulaire, les périodes angulaires des engrenages à rapport de vitesse variable englobant la période de rotation, et **en ce que**
l'autre organe rotatif comprend en outre un arbre intermédiaire (13) comprenant une paire de roues dentées entraînées non circulaires (4, 11) en prise avec les roues dentées motrices non circulaires (3, 12), l'une des roues dentées motrices (3 ; 12) et la roue dentée entraînée associée (4 ;11) comprenant une première paire d'engrenages à rapport variable, et l'autre roue dentée motrice et la roue dentée entraînée associée comprenant une deuxième paire d'engrenages à rapport variable assurant le rapport de vitesse uniforme entre les organes rotatifs sur la période angulaire.

26. Transmission à rapport infiniment variable selon la revendication 1, **caractérisée en ce que** l'accouplement multidirectionnel comprend :
une piste (20) comprenant une première surface de frottement tubulaire ;
un organe tubulaire (22) comprenant une première surface de roulement ;
un patin tubulaire (21) comprenant une deuxième surface frottement tubulaire destinée à se coupler avec la première surface frottement tubulaire; et
une deuxième surface de roulement en face de la deuxième surface de frottement et coaxiale avec la première surface de roulement, et formant avec la première surface de roulement une goulotte située entre elles ; et
plusieurs éléments de roulement (6) disposés dans la goulotte en butée contre les surfaces de roulement, la goulotte comportant une poche retenant dans celle-ci au moins un des éléments à rouleaux (6) pour coupler la piste (20) à l'organe tubulaire (22) lorsque l'organe tubulaire et le patin (21) tournent l'un par rapport à l'autre.

27. Transmission à rapport infiniment variable selon la revendication 26, **caractérisée en ce que** la première surface de frottement comprend une surface de frottement conique, la deuxième surface de frottement tubulaire ayant une forme s'adaptant à la surface conique, et que la came comprend une came à évitement (15, 16) pourvue d'un lobe destiné à presser la piste (20) contre le patin (21) sur la portion angulaire.

28. Transmission à rapport infiniment variable selon la revendication 26, **caractérisée en ce que** la première surface de frottement comprend une surface de frottement conique, la deuxième surface de frottement tubulaire ayant une forme s'adaptant à la surface conique, et que la came comprend une piste de roulement et un roulement en liaison avec elle, la piste de roulement comprenant une portion de piste (20) destinée à presser la piste d'accouplement contre le patin (21) sur la portion angulaire.

29. Transmission à rapport infiniment variable selon la revendication 26, **caractérisée en ce que** la première surface de frottement comprend une surface de frottement conique, la deuxième surface de frottement tubulaire ayant une forme s'adaptant à la surface de frottement conique, et que la came (84, 85) comprend une roue dentée pourvue d'une partie montante s'étendant axialement (83) destinée à presser la piste (20) contre le patin (21) sur la portion angulaire.
